(19) Europäisches Patentamt
European Patent Office
Office européen des brevets

(11) EP 2 565 166 B1

(12) EUROPEAN PATENT SPECIFICATION

(45) Date of publication and mention of the grant of the patent:
**06.01.2021 Bulletin 2021/01**

(21) Application number: **11774969.7**

(22) Date of filing: **25.04.2011**

(51) Int Cl.:
***C02F 3/12*** *(2006.01)* ***C02F 3/00*** *(2006.01)*

(86) International application number:
**PCT/JP2011/060089**

(87) International publication number:
**WO 2011/136188 (03.11.2011 Gazette 2011/44)**

# (54) WASTEWATER TREATMENT METHOD

ABWASSERVERARBEITUNGSVERFAHREN

PROCÉDÉ DE TRAITEMENT DES EAUX USÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.12.2010 JP 2010278088**
**26.04.2010 JP 2010101166**

(43) Date of publication of application:
**06.03.2013 Bulletin 2013/10**

(73) Proprietor: **Irie, Ryozo**
**Ina-shi, Nagano 396-0113 (JP)**

(72) Inventor: **Irie, Ryozo**
**Ina-shi, Nagano 396-0113 (JP)**

(74) Representative: **Dehns**
**St. Bride's House**
**10 Salisbury Square**
**London EC4Y 8JD (GB)**

(56) References cited:
**EP-A2- 0 857 696**
**JP-A- 9 029 280**
**JP-A- 11 169 896**
**JP-A- 2001 286 884**
**JP-A- 2007 216 145**
**JP-A- 2007 319 837**
**JP-A- 2007 319 837**
**JP-A- 2009 131 773**
**JP-A- 2009 142 786**
**KR-A- 20030 060 732**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Technical Field

The present invention relates to an efficient wastewater treatment method. More particularly, the present invention relates to a wastewater treatment method using an activated sludge process. A wastewater treatment system and a method for measuring pollutant decomposition activity of activated sludge microorganisms are also disclosed.

### Background Art

Wastewater, such as sewage (e.g., sewage and domestic wastewater), laboratory wastewater, industrial wastewater, livestock wastewater and sludge treatment water, is treated mainly by three methods.

That is to say, the treatment methods are broadly divided into three types, namely, a continuous treatment method, a sequencing batch reactor treatment method and an oxidation ditch (OD) treatment method. Such a continuous treatment method called a "standard method" as shown in Fig. 1 is used for various wastewater treatments, mainly, sewage treatment, and in a first treatment tank 2a, anaerobic treatment is carried out, and in a second treatment tank 3a and a third treatment tank 4a, aeration is carried out. A treatment method called a sequencing batch reactor treatment method is shown in Fig. 2. In an OD treatment method (Fig. 3), a large oval watercourse is built, raw water is allowed to flow therein, and aeration and stirring are intermittently carried out at the position of inflow of raw water and at the middle position of the watercourse. Each of these three methods is selected according to the type of wastewater used (raw water 1a), the amount of wastewater treated and the construction cost and is carried out.

In the case of, for example, the sequencing batch reactor treatment method (Fig. 2), treatment equipments of 4 tanks are installed, and raw water 1a is introduced into a first sequencing batch reactor (treatment tank) 2a and a second sequencing batch reactor 3a, each of which is equipped with an aeration device, a stirring device and a drainage device, and the raw water is subjected to activated sludge treatment therein. The sludge precipitated on the bottom of both the sequencing batch reactors is withdrawn and transferred into a first excess sludge tank 8a, and the sludge is thickened, stored in a second excess sludge tank 9a, properly discharged, subjected to dehydration and then subjected to landfilling, incineration or the like.

On the other hand, the supernatant liquid in the sequencing batch reactor is drawn up by the drainage device and discharged as an effluent 7a into a river. Usually, the raw water 1a is introduced into a treatment tank, etc., after the quality and the concentration of the influent wastewater are averaged, in an equalizing tank in many cases.

In any of the above wastewater treatment methods using the activated sludge process, enhancement of water quality (treated water quality) of the effluent (treated water) after the sewage treatment, stabilization of treatment efficiency, decrease in the amount of sludge that is produced with the treatment, and decrease in foaming, scumming (scum: floating matters of gathered solids and fats and oils on the water surface in the sewage treatment tank; by generation of gas from the scum, aeration is disturbed, to decrease the function of the treatment tank, and malodor is produced), bulking, etc. in the treatment have been desired in the past.

Of the problems in the conventional wastewater treatments, such decrease in activity of activated sludge bacteria in the course of the treatment using activated sludge as described above causes troubles, such as production of ammonia or hydrogen sulfide, development of bad smells, occurrence of foam and floating matters called scum, and introduction of them into the effluent, whereby the treatment efficiency is seriously decreased, and the water quality of the effluent is sometimes lowered.

That is to say, in the conventional sewage treatment, components of pollutants in the wastewater to be treated, such as sewage or wastewater flowing into the treatment system, substances contained in the influent, and composition of the pollutants always vary, and from the viewpoint of "activated sludge process", growth inhibitory substances that inhibit the activity of activated sludge (growth of activated sludge microorganisms) constantly flow into the treatment system. If the growth inhibitory substances flow into the treatment system, growth of the pollutant-decomposing activated sludge bacteria and microorganisms is inhibited, and the pollutant decomposition property is sometimes lowered.

Various causes of it can be considered, and above all, the raw water 1a introduced into the treatment tanks (sequencing batch reactors tanks) 2a and 3a frequently contains growth inhibitory substances that inhibit growth of the activated sludge microorganism group. Therefore, the activated sludge treatment ability is rapidly lowered, to markedly delay the progress of the wastewater treatment.

On the other hand, electricity consumption required for the aeration of each treatment tank and the excess sludge retention tank is increased, and this is a serious obstacle to the reduction of wastewater treatment cost.

Moreover, even if the wastewater treatment ability is enhanced, the amount of excess sludge, which is withdrawn from the treatment tank, then subjected to (centrifugal) dehydration and subjected to incineration or landfilling, is not reduced at all by the conventional treatment method, though it may be increased. That is to say, various expenses to treat the excess sludge keep on increasing. Specifically, electrical expenses for centrifugation and dehydration of the excess sludge, expenses for incineration or landfilling of the discharged sludge, transportation expenses therefore, etc. keep on increasing.

As a means to improve it, a method wherein a culture tank is installed in the treatment system to circulate the sludge is generally carried out, but in this method, the sludge reduction effect is sometimes small considering high installation expenses and high management expenses.

Methods for the sludge reduction are known as follows; a "culture method" wherein a culture tank is installed to enhance pollutant decomposition property of activated sludge, an "addition method" wherein activated sludge having high decomposition property is constantly added to a treatment tank, a "mill method" wherein sludge is ground by a mill and returned to a treatment tank, an "ozone method" wherein ozone is blown into sludge and the sludge is returned to a treatment tank, an "ultrasonic method" wherein sludge is ultrasonicated and returned to a treatment tank, a "water jet method" wherein sludge is ground by water jet and returned to a treatment tank, etc. In these sludge reduction methods, however, enormous expenses are required for the introduction of novel equipments and the maintenance thereof.

Under such circumstances as above, a method wherein a silicon compound or a magnesium compound is added to a treatment tank, a method wherein a nutrient such as peptone is introduced, and a method wherein seed bacteria for activated sludge are further added to a treatment tank have been only proposed in a patent literature 1, to enhance treatment efficiency in a night soil treatment tank. However, the purpose has not been attained yet sufficiently in the methods other than the night soil treatment.

On the other hand, reports on the pollutants contained in sewage or the night soil-decomposing bacterial strains have been rarely known heretofore.

The present inventor has found that night soil is decomposed by genus *Bacillus* bacteria (combination of the later-described Strain A and Strain B) and these genus *Bacillus* bacteria qualitatively exhibit starch decomposition property and fat and oil decomposition property, and have a suspended solid [SS] removal ratio, said SS being contained in a cooked meat medium (manufactured by Nissui Pharmaceutical Co. Ltd.) containing muscle protein as a main component, of not less than about 80% (non patent literature 1). Manufacturing of the cooked meat medium by Nissui Pharmaceutical Co, Ltd. was discontinued.

The present inventor has further found that when a silicon compound and a magnesium compound are added to a treatment tank in the night soil treatment, night soil-decomposing genus *Bacillus* bacteria dominate, whereby night soil decomposition occurs efficiently and development of malodor is reduced (non patent literatures 1 to 3). The present inventor has furthermore found that also in the case of sewage treatment, presence of a silicon compound and a magnesium compound is important for the reduction of sludge produced with the treatment and for the reduction of bad smells. The present inventor has furthermore found that for the pollutant decomposition, genus *Bacillus* bacteria not only having starch decomposition property and fat and oil decomposition property but also having a property to decompose suspended solid in a cooked meat medium are important.

In the non patent literatures 1 to 3, however, use of microorganism strains having high treatment ability and increase of efficiency by the treatment method are only proposed as attempts to reduce discharged sludge which is subjected to incineration or landfilling. It is no exaggeration to say that any method or technique to remarkably reduce sludge is not present yet.

The present inventor has also found that addition of a nutrient is also effective for solving foaming, formation of scum, bulking, etc. that occur in the sewage treatment (patent literature 2) .

Patent literature 3 describes a wastewater treatment method and system to reduce the stench caused by the organic wastewater during the biological treatment. Patent literature 4 describes a system and method for treating sewage-water using the standard activated sludge method, wherein a monitoring system is used to accurately observe microorganisms, such as Bacillus, in the tanks. Patent literature 5 describes a wastewater treatment method and system to maintain high mixed liquid suspended solids (MLSS) concentration in the activated sludge treatment tank.

Citation List

Patent Literature

Patent literature 1: JP-A-2002-86181
Patent literature 2: WO2006/115199 A1
Patent literature 3: JP 2007-319837
Patent literature 4: EP 0857696
Patent literature 5: JP 2007-216145


Non patent literature 1: Murakami, Iriye, et al.: "Domination of Bacillis spp. in Aerobic Night Soil Treatment Tank and Biochemical Properties Thereof", Journal of Japan Society of Water Environment, 18(2), pp. 97-108, 1995

Non patent literature 2: Ryozo Iriye and Hideki Takatsuka: "Studies on Sewage Treatment Improvement by Increase/Domination of Genus Bacillus Bacteria", Bokin Bobai (Journal of Antibacterial and Antifungal Agents, Japan), Volume 27(7), pp. 431-440, 1999

Non patent literature 3: Yukio Doi, Boon-Sing Lee, Ryozo Iriye, Shinichiro Tabuchi and Koichi Tateishi: "Bacterial Phase Dominating in Efficient Odorless Combined Treatment Purification Tank and Biochemical Properties Thereof", Bokin Bobai (Journal of Antibacterial and Antifungal Agents, Japan), Vol. 26(2), pp. 53-63, 1998

Disclosure of Invention

Problems to be Solved by the Invention

It is an object of the present invention to provide a wastewater treatment method for efficiently treating wastewater such as sewage, by which enhancement of water quality of water having been subjected to wastewater treatment (treated water quality) and sludge reduction can be attained at a low cost without carrying out drastic alteration of a wastewater treatment facility used in the conventional activated sludge process.

That is to say, it is an object of the present invention to provide a method which eliminates lowering of pollutant decomposition activity of an activated sludge treatment microorganism group, which greatly enhances the treatment ability of the microorganism group to raise treatment efficiency and to reduce the amount of excess sludge.

Means for Solving the Problems

As described above, expenses for the sewage treatment keep on rising, and reduction of the amount of sludge produced, reduction of bad smells, more efficient sludge dehydration, etc. have been desired. Moreover, enhancement and stabilization of the water quality after the treatment have been also desired from the viewpoint of environmental problem.

Studies on pollutant-decomposing microorganisms used in the activated sludge process and the like have been rarely known, and techniques to selectively culture microorganisms having high pollutant decomposition property in a sewage treatment tank or a sludge retention tank have not been known either. "Growth inhibition" that causes by flowing of growth inhibitory substances into the treatment system to inhibit growth of activated sludge bacteria and microorganisms having pollutant decomposition property is a difficult point in the increase of efficiency of the sewage treatment, and a solution of this growth inhibition has not been known either.

The present inventor has studied activated sludge microorganisms that function in the treatment of human wastes, and livestock wastes or the sewage treatment (including treatment of domestic wastewater and food industrial wastewater, the same shall apply hereinafter) since 1991 and has accomplished the present invention.

It is commonly thought that sludge is composed of activated sludge microorganisms, but the present inventor has an opinion that sludge contains undecomposed pollutants in a large amount. The present inventor has reported that when starch-decomposing bacteria, fat and oil-decomposing bacteria and muscular protein-decomposing bacteria grow in the night soil treatment activated sludge or the sewage treatment activated sludge, the improvement of water quality of treated water, sludge reduction and bad smells reduction are observed (non patent literatures 1 and 2). He has also reported that in this treatment, addition of a silicon compound or a magnesium compound is necessary for the growth and maintenance of bacteria having high pollutant decomposition property (non patent literatures 1 to 3). The present inventor has further found that during the growth of bacteria having high pollutant decomposition property, scum and foam are sometimes formed, and in order to solve these problems, addition of peptone is effective, and he has already applied for a patent (patent literature 2).

Thereafter, the present inventor has carried out tests for increasing efficiency of sewage treatment for 3 years from December, 2006 to December, 2009, and he has found that addition of an aluminum compound and a dry yeast extract as treatment accelerators in addition to a silicon compound, a magnesium compound and peptone exerts high effects such that the activated sludge microorganisms are liberated from a state of shocking conditions when substances that inhibit growth of activated sludge microorganisms flow into the system, and the pollutant-decomposing bacterial floras are recovered, and besides, bacterial floras having higher pollutant decomposition property appear.

Judging from analysis of 16S rDNA base sequences and gene tree, it is thought that the pollutant-highly decomposing strains that have appeared are variants derived from the seed bacterial strain added, and that activities of various enzymes have been enhanced and non-specificity of various enzymes has been enhanced. That is to say, the variants derived from the seed bacterial strain added are thought to be strains in which enzyme production ability has been induced. The expression "enzyme production ability has been induced" means that the enzyme itself undergoes variation and the enzyme activity is enhanced, and it is thought that protease activity and substrate non-specificity of protease have been particularly enhanced.

In addition to appearance, growth and maintenance of the bacterial strains having high pollutant decomposition property, molds and yeasts exhibiting starch decomposition property, fat and oil decomposition property and cellulose decomposition property appeared, and a given number of them could be maintained.

In the molds that appeared, strain G was present, and this Strain G has antibiotic production property. As growth of Strain G was observed, growth of filamentous bacteria came to be not observed in the treatment tank.

The present inventor has found that in order to grow and maintain the microorganisms having high pollutant decomposition property, it is necessary to keep a proper amount of return sludge, and to keep a proper aeration rate in addition to adding treatment accelerators.

When the sewage treatment facility was managed according to the above conditions, the treated water BOD removal ratio was not less than 57%, the suspended solid [SS] removal ratio was not less than 67%, the total nitrogen [T-N] removal ratio was not less than 15%, and the removal ratio of the total amount of phosphorus compounds [T-P] was the same as the conventional one. Each ratio was compared with a ratio to convention and on an annual average. Further, the amount (dry weight) of sludge produced was reduced by 50% as a ratio to convention, and was reduced (could be weight-reduced) by about 60% as a ratio to convention in terms of a gross yield coefficient of sludge (= 100 $\times$ dry weight of increased sludge/amount of removed BOD) .

As the treatment accelerators added, a silicon compound and a magnesium compound are known, but the addition effect of an aluminum compound has not been known. On the other hand, the present inventor has found that when foam and scum are formed, addition of peptone is effective for solving them, and further, he has newly found that addition of dry yeast contributes to solving them and a prominent effect is observed in the recovery from inhibition of growth of the activated sludge microorganisms.

It is known to add seed bacteria as pollutant-decomposing bacteria, but the effect does not last long. Derivation of strains having higher pollutant decomposition property from the seed bacteria added has not been known.

In addition, an instance in which growth of microorganisms having high starch decomposition property, fat and oil decomposition property and cellulose decomposition property, such as molds and yeasts, has been confirmed in a treatment tank, a sludge retention tank or a thickened sludge retention tank, has not been known in the conventional sewage treatment.

Based on such findings, the present inventor has accomplished the present invention.

That is to say, the wastewater treatment method of the present invention is referred to herein as "wastewater treatment method ($\alpha$)". A further wastewater treatment method, referred to herein as "wastewater treatment method ($\beta$)" is also described below.

The wastewater treatment method ($\alpha$) is shown in Figs. 2 and 4.

The invention provides a wastewater treatment method for an activated sludge treatment of raw water 1a by a sequencing batch reactor treatment method, the said sequencing batch reactor treatment method being a method in which:

raw water 1a is introduced into a first sequencing batch reactor 2a and a second sequencing batch reactor 3a, each of which is equipped with an aeration device, a stirring device and a drainage device, and is subjected to activated sludge treatment therein;
the sludge precipitated on the bottom of both the sequencing batch reactors is withdrawn (Xa) and transferred into a first excess sludge tank 8a, and then is thickened and stored in a second excess sludge tank 9a, and discharged; and the supernatant liquid in the sequencing batch reactors is discharged into a river,
the said wastewater treatment method comprising:

(i) using a sludge retention tank 12a equipped with an aerator and a stirrer and a thickened sludge retention tank 13a equipped with an aerator and a stirrer as the first excess sludge tank 8a and the second excess sludge tank 9a, respectively;
(ii) performing a first sludge returning step Va that is a step of returning sludge to the first sequencing batch reactor 2a and the second sequencing batch reactor 3a from the sludge retention tank 12a and the thickened sludge retention tank 13a in both of which the sludge was previously aerated and stirred; and
(iii) performing a second sludge returning step Wa that is a step of returning sludge, which was previously aerated and stirred in the thickened sludge retention tank 13a, to the sludge retention tank 12a;

wherein the sludge in the thickened sludge retention tank 13a is supplied from the sludge retention tank 12a through a sludge thickening step Za,
thereby maintaining the number of genus *Bacillus* bacteria in the sequencing batch reactors 2a and 3a.

In the method ($\alpha$), the second sludge returning step Wa is performed in order to avoid activity reduction caused by the influence of a growth inhibitor or the like.

It is preferable that a treatment accelerator is added to one or more tanks selected from a first sequencing batch reactor 2a, a second sequencing batch reactor 3a, the sludge retention tank 12a equipped with an aerator and a stirrer, and the thickened sludge retention tank 13a equipped with an aerator and a stirrer. The treatment accelerator is preferably one or more substances selected from the group consisting of a silicon compound, a magnesium compound, an aluminum compound, peptone and a dry yeast extract.

It is preferable that a nitrogen source is added to one or more tanks selected from the sludge retention tank 12a equipped with an aerator and a stirrer, and the thickened sludge retention tank 13a equipped with an aerator and a stirrer. The nitrogen source is preferably one or more substances selected from urea, ammonium sulfate, ammonium chloride and ammonium nitrate.

The wastewater treatment method (β) disclosed herein is, as shown in Fig. 5, a wastewater treatment method comprising, in a wastewater treatment using an activated sludge process including at least the following 5 steps:

a step (1): aeration step wherein sewage or wastewater 1 having a biochemical oxygen demand [BOD] of not less than 80 mg/L is allowed to flow into an aeration tank 10 equipped with an aeration device and a stirring device, to which seed bacterial flora 2 have been added, and the sewage or the wastewater is aerated and stirred to obtain a stirred liquid 11,

a step (2): separation step wherein the stirred liquid 11 obtained in the step (1) is allowed to flow into a sludge sedimentation tank 20 and allowed to stand still to separate the liquid into a supernatant liquid 21 and precipitated sludge 22, and then the supernatant liquid 21 is discharged out of the system as an effluent 23,

a step (3): retention and returning step wherein the precipitated sludge 22 obtained in the step (2) is withdrawn and retained in a sludge retention tank 30, and a part of the sludge is returned to the aeration tank 10,

a step (4): thickening step wherein the retained sludge obtained in the step (3) is thickened by a sludge thickening tank 40 and/or a centrifugal thickening machine 60, and

a step (5): retention and discharge step wherein the thickened sludge obtained in the step (4) is retained in a thickened sludge retention tank 50, and a part of the sludge is discharged out of the system,

installing at least an aeration device selected from an aeration device and a stirring device in the sludge retention tank 30 and/or the thickened sludge retention tank 50, to arrange a retention tank 30 equipped with the device and/or a thickened sludge retention tank 50 equipped with the device, and performing the following sludge returning (I) and/or (II):

sludge returning (I): withdrawing stirred and retained sludge 31 obtained by aeration or aeration and stirring in the sludge retention tank 30 equipped with the device and returning the sludge to the aeration tank 10, and/or

sludge returning (II): withdrawing stirred, thickened and retained sludge 51 obtained by aeration or aeration and stirring in the thickened sludge retention tank 50 equipped with the device and returning the sludge to the aeration tank 10 and/or the sludge retention tank 30 equipped with the device,

adding a sludge flocculant and a nutrient to one or more tanks of the aeration tank 10, the sludge retention tank 30 equipped with the device and the thickened sludge retention tank 50 equipped with the device, and

maintaining the number of genus *Bacillus* bacteria in the tank, to which the sludge flocculant and the nutrient have been added, at $2.0\times10^5$ to $111\times10^5$ cfu/mL.

It is possible that the aeration tank 10 is composed of two or more tanks connected in series as shown in Fig. 6, in a first treatment tank 12, an anaerobic treatment with only stirring without aeration is conducted, and seed bacterial flora 2 are added to a second treatment tank 13 and its subsequent treatment tanks, and aeration and stirring are performed.

By temporarily stopping the aeration and stirring functions of such an aeration tank 10 as shown in Fig. 5, the aeration tank 10 can be used also as the sludge sedimentation tank 20.

It is preferable that pollutant-highly decomposing bacterial floras having starch decomposition property and fat and oil decomposition property and having a suspended solid [SS] removal ratio, said SS being contained in a cooked meat medium (Oxoid) having the following composition, of not less than 70% and a suspended solid [SS] removal ratio, said SS being contained in a cooked meat medium (Difco) having the following composition, of not less than 60% are derived from the bacterial floras 2;

composition of cooked meat medium (Oxoid) (per liter): heart muscle (dry) 73.0 g, peptone 10.0 g, Lab Lemco powder 10.0 g, sodium chloride 5.0 g, and glucose 2.0 g; and

composition of cooked meat medium (Difco) (per liter): bovine heart muscle (dry) 98.0 g, proteose peptone 20.0 g, glucose 2.0 g, and sodium chloride 5.0 g.

The pollutant-highly decomposing bacterial floras preferably have a SS removal ratio, said SS being contained in the cooked meat medium (Oxoid), of not less than 80%.

The seed bacterial floras 2 are preferably Strain A (*Bacillus thuringiensis;* accession number of international deposit: FERM BP-11280), Strain B *(Bacillus subtilis;* accession number of international deposit: FERM BP-11281) and Strain C *(Bacillus subtilis;* accession number of international deposit: FERM BP-11282).

It is preferable that the pollutant-highly decomposing bacterial floras contain at least one kind of genus *Bacillus* bacteria selected from the group consisting of Strain D *(Bacillus subtilis;* accession number of international deposit: FERM BP-11283), Strain E *(Bacillus subtilis;* accession number of international deposit: FERM BP-11284) and Strain F (*Bacillus subtilis;* accession number of international deposit: FERM BP-11285); or contain at least one kind of the genus *Bacillus* bacteria, and mold of Strain G (*Penicillium turbatum;* accession number of international deposit: FERM BP-11289) and/or at least one kind of yeast selected from the group consisting of Strain H (*Geotrichum silvicola;* accession number of international deposit: FERM BP-11287), Strain I (*Pichia fermentans;* accession number of international deposit: FERM BP-11286) and Strain J (*Pichia guilliermondii;* accession number of international deposit: FERM BP-11288) .

It is preferable that the sludge flocculant contains an aluminum compound, and a silicon compound and/or a magnesium compound, and based on 1 g/l of a mixed liquor suspended solid [MLSS] in the tank to which the sludge flocculant is added, the aluminum compound in terms of aluminum oxide [$Al_2O_3$] is added in an amount of 0.01 to 0.5 g; the silicon compound in terms of silicon dioxide [$SiO_2$] is added in an amount of 0.01 to 2 g; and the magnesium compound in terms of magnesium oxide [MgO] is added in an amount of 0.01 to 0.5 g, with the proviso that each amount is an amount per cubic meter [$m^3$] of each tank and per day.

It is preferable that the nutrient is peptone and/or a dry yeast extract, and based on 1 g/l of MLSS in the aeration tank to which the nutrient is added, peptone is added in an amount of 0.8 to 70 mg, and the dry yeast extract is added in an amount of 0.1 to 10 mg; based on 1 g/l of MLSS in the sludge retention tank 30 equipped with the device to which the nutrient is added, peptone is added in an amount of 3.5 to 250 mg, and the dry yeast extract is added in an amount of 0.7 to 45 mg; and based on 1 g/l of MLSS in the thickened sludge retention tank 50 equipped with the device to which the nutrient is added, peptone is added in an amount of 2.0 to 150 mg, and the dry yeast extract is added in an amount of 0.4 to 25 mg, with the proviso that each amount is an amount per cubic meter [$m^3$] of each tank and per day.

It is preferable that together with the sludge flocculant and the nutrient, one or more nitrogen sources selected from the group consisting of urea, ammonium sulfate, ammonium chloride and ammonium nitrate are added to the sludge retention tank 30 equipped with the device and/or the thickened sludge retention tank 50 equipped with the device, and the nitrogen source in terms of $N_2$ is added in an amount of 0.1 to 15 g based on 1 g/l of MLSS in the sludge retention tank 30 equipped with a device, and is added in an amount of 1 to 150 mg based on 1 g/l of MLSS in the thickened sludge retention tank 50 equipped with the device, with the proviso that each amount is an amount per cubic meter [$m^3$] of each tank and per day.

The wastewater treatment system disclosed herein is a wastewater treatment system comprising, in a wastewater treatment using the aforesaid activated sludge process,

installing at least an aeration device selected from an aeration device and a stirring device in the sludge retention tank 30 and/or the thickened sludge retention tank 50 to arrange a retention tank 30 equipped with the device and/or a thickened sludge retention tank 50 equipped the device, and performing the aforesaid sludge returning (I) and/or sludge returning (II),

adding a sludge flocculant and a nutrient to one or more tanks of the aeration tank 10, the sludge retention tank 30 equipped with the device and the thickened sludge retention tank 50 equipped with the device, and
maintaining the number of genus *Bacillus* bacteria in the tank, to which the sludge flocculant and the nutrient have been added, at $2.0\times10^5$ to $111\times10^5$ cfu/mL.

In the wastewater treatment system disclosed herein, it is possible that the aeration tank 10 is composed of two or more tanks connected in series, and in a first treatment tank 12, an anaerobic treatment to perform only stirring without aeration is conducted, and to a second treatment tank 13 and its subsequent treatment tanks, seed bacterial flora 2 are added, and aeration and stirring are performed. By temporarily stopping the functions of aeration and stirring of the aeration tank 10, the aeration tank 10 may be used also as the sludge sedimentation tank 20.

The sludge flocculant and the nutrient in the wastewater treatment system disclosed herein are the same as the sludge flocculant and the nutrient that are preferably used in the wastewater treatment method (β), and the amounts thereof are the same as those in the wastewater treatment method (β). The nitrogen source added to the sludge retention tank 30 equipped with the device and/or the thickened sludge retention tank 50 equipped with the device together with the sludge flocculant and the nutrient, and the amount thereof are the same as those in the wastewater treatment method (β).

The method disclosed herein for measuring pollutant decomposition activity of activated sludge microorganisms comprises calculating a SS removal ratio from the following formula (i) using a dry weight (X) of a suspended solid [SS] obtained after bacterial inoculation and cultivation in the cooked meat medium and a dry weight (Y) of SS obtained after culturing without performing bacterial inoculation in the cooked meat medium;

$$\text{SS removal ratio (\%)} = \{(Y-X)/Y\}\times 100 \qquad \text{(i)}$$

thereby measuring pollutant decomposition performance of activated sludge microorganisms contained in the aforesaid seed bacterial floras or in the aforesaid pollutant-highly decomposing bacterial floras.

Effect of the Invention

The wastewater treatment method (α) of the present invention makes it possible to greatly increase the amount of treatable wastewater (treated water BOD removal ratio: not less than 57%, SS [suspended solid] removal ratio: not less than 67%, T-N removal ratio: not less than 15%, in terms of annual removal ratio), and the method has extremely excellent effects, that is, surprising reduction (50%) of the amount of excess sludge produced, conspicuous decrease (about -60%) in the gross yield coefficient of sludge, marked reduction of electric power required for centrifugal separation of aerated and retained excess sludge, great improvement in the water quality of effluent, and drastic reduction of bad smells in the circumference of the treatment facility. Further, it has been found that by carrying out the wastewater treatment method (α) of the present invention, the pollutant-decomposing microorganism group (main bacteria: genus *Bacillus* bacteria) added as seed bacteria during the run of treatment entirely disappears after the lapse of a given time, and a pollutant-decomposing microorganism group having much higher pollutant decomposition performance is derived. It has been found that in this pollutant-decomposing microorganism group, molds and yeasts of natural origin are also contained.

The wastewater treatment method (β) disclosed herein can provide a wastewater treatment method having effects relating to the following matters (1) to (10), a wastewater treatment system, and a method for measuring pollutant decomposition activity of activated sludge microorganisms.

(1) Pollutant-highly decomposing bacterial floras derived from seed bacteria

By performing the wastewater treatment method (β), bacterial floras having high pollutant decomposition property are derived from seed bacteria, and further, even if seed bacteria are not added (with the proviso that genus *Bacillus* bacteria having high pollutant decomposition property are present in soil, night soil or the like, and they flow into the system and become dominant to perform efficient treatment), bacterial floras having high pollutant decomposition property are derived (a little longer time is required as compared with the case of adding seed bacteria; non patent literature 2).

When the wastewater treatment method is carried out using Strain A, Strain B and Strain C as seed bacteria (described in detail in the working examples), plural kinds of bacterial floras (genus *Bacillus* bacteria, molds, yeasts) having pollutant decomposition activity of the similar level as that of these seed bacteria are derived. Since plural kinds of microorganisms are contained in activated bacterial floras (that is, they differ from one another in sensitivity to growth inhibitory substances), growth inhibition hardly occurs as a whole.

(2) Sludge reduction

The amount (dry weight) of sludge produced can be decreased by not less than 50% as a ratio to convention, and can be decreased by about not less than 60% in terms of a gross yield coefficient of sludge (= 100 × dry weight of increased sludge/amount of removed BOD).

(3) Improvement in water quality of treated water

The treated water BOD can be improved by not less than 57%, the SS removal ratio can be improved by not less than 67%, and the total nitrogen [T-N] can be improved by not less than 15%, as a ratio to convention and on an annual average. Regarding the total amount of phosphorus compounds [T-P] treated, the status quo is maintained. If the treated water quality can be improved as in the present invention, evil influence exerted on the environment can be suppressed.

(4) Inhibition of production of bad smell components

Production of bad smell components, such as ammonia and hydrogen sulfide, can be inhibited in the treatment tank or the sludge retention tank. As a result, non-repair term (repair interval) for the facility can be extended, and therefore, the facility management cost can be saved.

(5) Saving of power consumption

Even if the amount of influent BOD increases with time, wastewater treatment can be performed with high efficiency and high quality as above. Therefore, when treated water having quality of the same level as that of the conventional treated water is desired, the power consumption can be maintained as it is or can be lowered.

(6) Almost unnecessary repair of facility

Large-scale repair of the conventional facility is unnecessary. That is to say, the wastewater treatment method (β) disclosed herein can be carried out without altering the conventional sewage treatment facility or by making small-scale alteration. As a result, as compared with the conventional method, sludge reduction is possible.

(7) Inhibition of growth of filamentous bacteria

Since growth of filamentous bacteria is inhibited, foaming and formation of scum can be inhibited, favorable sludge sedimentation property can be maintained, and management of facility is easy.

(8) Reduction of sewage sludge treatment cost

As described in detail in the working examples, the amount of sewage treated in 2009 was 185 $m^3$/day, and the sludge reduction ratio was 50.1% as compared with the sludge in 2005. In spite that the amount of sludge produced remarkably decreased, that is, the amount of removed BOD increased by 35.92% and the weight of removed SS increased by 60.85%, as compared with those in 2005, the weight of decreased dry sludge corresponded to 7.458 t. This amount of the dry sludge corresponds to 124 lorries of 3.0 $m^3$ in terms of thickened sludge (MLSS content in thickened sludge of sewage treatment facility used in the working examples is about 2%, and the moisture content is about 98%). Further, this amount corresponds to transportation cost of 620,000 yen, corresponds to 50 $m^3$ of dehydrated cake (moisture content: 85%; moisture content (%) = (weight of moisture/weight of moisture + weight of MLSS) × 100), and corresponds to treatment cost of about 800,000 yen (total: 1,420,000 yen), so that the cost saved corresponds to 1,420,000 yen/year. If calculation is made taking the predicted sludge reduction ratio between April, 2009 and March, 2010 (2009 full year) as 62%, the savable treatment cost can be predicted to be 1,760,000 yen/year.

The weight of "dry sludge" is measured in accordance with a suspended solid measuring method (JIS K0102 14.1). In this suspended solid measuring method, a given volume (200 mL) of a sludge suspension is filtered through a glass fiber filter (pore diameter: 1 μm, diameter: 25 to 50 mm), dried at 105 to 110°C for 1 hour and allowed to cool in a desiccator (for about 1 hour), followed by calculating the weight from the following formula.

$$\text{Amount of dry suspended solid (mg/L)} = [\text{suspended solid + filter weight (mg)} - \text{filter weight}] \times 1000/\text{sample (mL)}$$

In the formula, [suspended solid + filter weight (mg) - filter weight] is in the range of 20 to 40 mg.

When MLSS in a tank is measured in a usual work, measurement is carried out using a MLSS meter (equipment to measure MLSS concentration (mg/L) utilizing light scattering phenomenon).

The "thickened sludge" means sludge (having low moisture content) obtained by withdrawing water from sludge of sedimentation tank and thereby thickening the tank sludge.

(9) Applicability to various wastewater

The wastewater treatment method of the present invention is applicable not only to sewage treatment but also to livestock wastewater treatment, night soil treatment and other wastewater treatments such as food industrial wastewater treatment, and therefore, it is applicable in various fields.

(10) Decrease in a gross yield coefficient of sludge

In the case of a facility which has a design value for a gross yield coefficient of sludge of 40%, and an actual gross yield coefficient of sludge of not less than 90%, the gross yield coefficient of sludge can be decreased to not more than 35%.

Here, the "design value for a gross yield coefficient of sludge" is calculated from values obtained in experiments made by each treatment facility construction company in accordance with sewage treatment system, and is described in a bidden document or the like. Although the regal ground for the value of not more than 40% is not clear, it is thought that the upper limit of the gross yield coefficient of sludge is 40% (considered to be a reference value defined by Japan Sewage Works Agency).

The "actual gross yield coefficient of sludge" is calculated from values obtained by running the treatment facility by the facility management company (to which management is entrusted by the local self-government).

The gross yield coefficient of sludge is calculated from the following formula.

Gross yield coefficient of sludge (%) = 100 ×weight of increased sludge (kg in terms of dry matter)/amount of removed BOD (kg)

Brief Description of Drawings

[Fig. 1] Fig. 1 is a view schematically showing basic constitution of wastewater treatment tanks in a conventional continuous wastewater treatment facility.

[Fig. 2] Fig. 2 is a view schematically showing basic constitution of a conventional sequencing batch reactor in wastewater treatment.

[Fig. 3] Fig. 3 is a view schematically showing basic constitution of conventional OD tanks in wastewater treatment.

[Fig. 4] Fig. 4 is a view schematically showing return of sludge and a flow of excess sludge treatment in the wastewater treatment method (α) of the present invention, and this is applicable to Fig. 2.

[Fig. 5] Fig. 5 is a view schematically showing constitution of tanks used in the wastewater treatment method (β) disclosed herein. In this figure, (a) indicate that stirred and retained sludge 31 may be thickened by a centrifugal thickening machine 60, and (b) indicates that stirred and retained sludge 31 may be allowed to flow into a sludge thickening tank 40. An embodiment wherein an aeration tank 10 of Fig. 5 is applied to such a continuous treatment as shown in Fig. 6 is identical with an embodiment of a continuous treatment wherein Fig. 1 and Fig. 4 are combined together.

[Fig. 6] Fig. 6 is a view schematically showing an embodiment wherein an aeration tank 10 of Fig. 5 is constituted of plural treatment tanks and thereby applied to a continuous treatment.

[Fig. 7] Fig. 7 is a view schematically showing constitution of tanks of the wastewater treatment method (β) used in the working examples, and each of a sludge retention tank 30 and a thickened sludge retention tank 50 has an aeration device and a stirring device. Hereinafter, returning of stirred and retained sludge 31 from a sludge retention tank 30 to a sequencing batch reactor 70 is also referred to as "sludge returning (i)"; returning of stirred, thickened and retained sludge 51 from a thickened sludge retention tank 50 to a sequencing batch reactor 70 is also referred to as "sludge returning (ii)"; and returning of stirred, thickened and retained sludge 51 from a thickened sludge retention tank 50 to a sludge retention tank 30 is also referred to as "sludge returning (iii)".

The embodiment of Fig. 7 is identical with an embodiment of a sequencing batch reactor treatment wherein Fig. 2 and Fig. 4 are combined together.

[Fig. 8] Fig. 8 shows 16S rDNA base sequences (1,510 bp) of Strain C, Strain D, Strain E or Strain F. In this figure, "R" designates A (adenine) or G (guanine). A sequence of the head (5'-end) 19 bases and a sequence of the 3'-end 16 bases in the base sequences indicate base sequences corresponding to a sequence of 9F primer and a sequence of 1510R primer, respectively.

Best Modes for Carrying Out the Invention

The wastewater treatment method (α) of the present invention is described below in more detail with reference to Fig. 2 and Fig. 4 of the attached drawings.

<u>Wastewater treatment method (α)</u>

When wastewater, such as sewage (e.g., sewage and domestic wastewater), laboratory wastewater, industrial wastewater, livestock wastewater and sludge treated water, is treated using activated sludge, activity of activated sludge microorganisms is decreased with progress of the treatment, and troubles, such as development of bad smells of ammonia or hydrogen sulfide, occurrence of foam and floating matters called scum, and inflow of them into an effluent, are brought about in any of the treatment methods of continuous type, sequencing batch reactor type and OD type. Because of these troubles, treatment efficiency is seriously decreased, and besides, water quality of the discharged wastewater is lowered. Various causes of them can be considered, and above all, it is thought that raw water 1a (wastewater) introduced into treatment tanks (2a and 3a in Fig. 2) frequently contains growth inhibitory substances that inhibit growth of the activated sludge microorganism group, and therefore, the activated sludge treatment ability is rapidly decreased to lower the progress and the efficiency of the wastewater treatment.

Usually, withdrawal of sludge from each treatment tank to an excess sludge tank and to a sludge retention tank is performed in the run of wastewater treatment, and after a given amount of sludge is accumulated, the sludge is subjected to thickening, dehydration, etc. and then discharged. This withdrawal is automatically performed for a given period of time.

In the wastewater treatment method ($\alpha$) of the present invention, the amount of the excess sludge withdrawn is in the range of about 10 to 25% of the wastewater that is being treated in each treatment tank, even if activated sludge treatment of any type is used, and when the amount thereof is about 15 to 17%, the efficiency is good. Usually, the below-described returning of sludge in an amount corresponding to the amount of this sludge withdrawal is performed at the same time.

As shown in Fig. 4, prior to the sludge withdrawal, sludge having been aerated and stirred is returned from a "sludge retention tank 12a equipped with an aerator and a stirrer" (e.g., first excess sludge tank 8a equipped with at least an aeration device selected from an aeration device and a stirring device to perform aeration and stirring) to a treatment tank (aeration tank or anaerobic tank) ("first sludge returning step" Va). By virtue of this, activated sludge treatment can be stably performed while maintaining the number of microorganisms (index: pollutant-decomposing genus *Bacillus* bacteria) having high pollutant decomposition property in the treatment tank at $2.0\times10^5$ to $22.5\times10^5$ cfu/mL. In the case of the sequencing batch reactor method, the amount of return sludge in the first sludge returning step is in the range of 10 to 30%, preferably 15 to 17%, of the amount of influent raw water. This first sludge returning step is important for the enhancement of efficiency of the wastewater treatment by performing activated sludge treatment while maintaining the number of microorganisms (index: pollutant-decomposing genus *Bacillus* bacteria) having high pollutant decomposition activity in the sequencing batch reactor at $2.0\times10^5$ to $22.5\times10^5$ cfu/mL, which is one feature of the wastewater treatment method ($\alpha$) of the present invention.

In the wastewater treatment method ($\alpha$) of the present invention, sludge returning ("second sludge returning step" Wa in Fig. 4) from a "thickened sludge retention tank 13a equipped with an aerator and a stirrer" (e.g., second sludge tank 9a for performing aeration and stirring) to a "sludge retention tank 12a equipped with an aerator and a stirrer" (e.g., first excess sludge tank 8a for performing aeration and stirring) is carried out. The amount of the return sludge in this second sludge returning step is in the range of 15 to 60%/week, preferably 15 to 25%/week, based on the amount of sludge in the tank 12a. When growth of an activated sludge treatment microorganism group is inhibited in each treatment tank and/or the tank 12a, for example, when the number of genus *Bacillus* bacteria (as an index) in the tank 12a is decreased to not more than about $7.5\times10^5$ cfu/mL, this second sludge returning step is extremely effective for regeneration and recovery of the activated sludge treatment microorganism group. During the run of the activated sludge treatment, filamentous bacteria sometimes spread to cause inhibition of growth of an activated sludge treatment microorganism group. The present inventor has found that also in this case, this sludge returning from the tank 13a to the tank 12a extremely effectively serves to inhibit growth of the filamentous bacteria. It has been also found that by virtue of this, novel and higher pollutant decomposition activity of the microorganism group in the activated sludge treatment than that of the seed bacteria is exhibited. Moreover, a notable fact that the amount of pollutants is decreased by performing this second sludge returning step has been found.

In the wastewater treatment method ($\alpha$) of the present invention, activated sludge treatment is performed while the number of pollutant-decomposing *Bacillus subtilis,* which is an index strain of bacteria of a microorganism group having high pollutant decomposition property in the treatment tank, is maintained at $2.0\times10^5$ to $22.5\times10^5$ cfu/mL. As examples of index bacteria of the genus *Bacillus* bacteria, *Bacillus thuringiensis* Strain A, *Bacillus subtilis* Strain B and *Bacillus subtilis* Strain C, which are seed bacteria, and *Bacillus subtilis* Strain D, *Bacillus subtilis* Strain E and *Bacillus subtilis* Strain F, isolation of which is described in detail in the working examples, were used. By the method described in Example 3, Strain A + Strain B, Strain C, Strain D, Strain E and Strain F proved to be pollutant-decomposing strains.

When the aeration level in the tank 12a is expressed in terms of ORP [oxidation-reduction potential], the ORP is in the range of 140 to 280 mV under the conditions of DO [amount of dissolved oxygen] of 1 mg/L. Aeration in the tank 13a is performed as simply as air blow is done, and when the level of air blow is expressed in terms of ORP, the ORP is in the range of -100 to -300 mV under the conditions of DO of 0 mg/L.

In the conventional methods, there is no instance in which aeration is performed in any of first and second excess sludge tanks, a sludge retention tank, a sludge thickening tank and a thickened sludge retention tank.

Fig. 4 is a schematic view showing only a flow of sludge returning in the wastewater treatment method ($\alpha$) of the present invention, and operations conducted, when this wastewater treatment method ($\alpha$) is applied to a usual sequencing batch reactor method (Fig. 2) is described below.

Case of sequencing batch reactor treatment method

As shown in Fig. 2, raw water 1a is received by a first sequencing batch reactor 2a and a second batch reactor 3a alternately at intervals of 6 hours, and during the period of 6 hours, aeration and stirring (one cycle) are carried out. Accordingly, 4 cycles are usually carried out per day, and the number of times and the period of time of the aeration and the stirring are properly determined. For example, the aeration and the stirring are carried out 2 to 3 times/cycle, the aeration time is about 1.5 hr×2/cycle, and the stirring time is about 1.5 hr×2/cycle. While the aeration and the stirring are stopped, sedimentation of sludge and discharge of treated water are carried out over a period of 4 to 5 hours. In addition, withdrawal of sludge is carried out.

The operations conducted when the wastewater treatment method ($\alpha$) of the present invention is applied to this sequencing batch reactor method will be described in detail in the working examples.

It has been found that by the addition of treatment accelerators to the treatment tank, the tank 12a and the tank 13a, in addition to the step of returning excess sludge from the tank 12a to the treatment tank (sequencing batch reactor), high effects of liberating an activated sludge treatment microorganism group in each tank from a state of shocking conditions caused by inflow of growth inhibitory substances, recovering pollutant-decomposing bacteria and developing bacteria having much higher pollutant decomposition property are obtained.

Use of a silicon compound or a magnesium compound (independent use) as the treatment accelerator sufficiently exerts an effect, but use of a mixture of a silicon compound, a magnesium compound, an aluminum compound, peptone and a dry yeast extract exerts a better effect. When a mixture of a silicon compound, a magnesium compound, an aluminum compound, peptone and a dry yeast extract is used in combination with a nitrogen source, a much better effect is observed. The treatment accelerators are added once or twice a week. The treatment accelerators added are adsorbed by flocs immediately after the addition. Therefore, they are thickened to 30 to 70 times, usually about 50 times, in the flocs, and they act on the microorganism group. When the activated sludge treatment microorganism group suffers growth inhibition and shocking conditions in each treatment tank and/or the tank 12a, the treatment accelerators are added every time, whereby growth of the activated sludge treatment microorganism group can be recovered.

In the wastewater treatment method ($\alpha$) of the present invention, addition of a nitrogen source to the tank 12a and/or the tank 13a is preferable because it is effective particularly for the growth of the pollutant-decomposing microorganism group. As the nitrogen sources, peptone, a yeast extract, and/or nitrogen compounds (such as urea, ammonium sulfate, ammonium nitrate and ammonium chloride), and return sludge from the retention tanks 12a and 13a are used singly or in combination of two or more kinds. Use of a combination of the treatment accelerator and the nitrogen source is effective for the growth of the pollutant-decomposing microorganism group, and besides, it greatly contributes to derivation of a novel pollutant-decomposing microorganism group.

Next, the wastewater treatment method ($\beta$), the wastewater treatment system and the method for measuring pollutant decomposition activity of activated sludge microorganisms are described in detail with reference to Figs. 5 to 7 of the attached drawings.

Wastewater treatment method ($\beta$)

As shown in Fig. 5, the wastewater treatment method ($\beta$) performs wastewater treatment by comprising, in a wastewater treatment using an activated sludge process including at least the aforesaid 5 steps,

installing at least an aeration device selected from an aeration device and a stirring device in a sludge retention tank 30 and/or a thickened sludge retention tank 50 and performing the aforesaid sludge returning (I) and/or (II);
adding a sludge flocculant and a nutrient to one or more tanks of the aeration tank 10, the sludge retention tank 30 equipped with the device and the thickened sludge retention tank 50 equipped with the device; and
maintaining the number of genus *Bacillus* bacteria in the tank, to which the sludge flocculant and the nutrient have been added, at $2.0\times10^5$ to $111\times10^5$ cfu/mL.

By carrying out such wastewater treatment ($\beta$) disclosed herein, pollutants and sludge are efficiently decomposed by bacterial strains and microorganism group having high starch decomposition property, fat and oil decomposition property and protein decomposition property. Of genus *Bacillus* bacteria, a combination of Strain A (starch decomposition property + fat and oil decomposition property) and Strain B (fat and oil decomposition property + protein decomposition property), said strains having been internationally deposited, and strains of Strain C to Strain F have starch decomposition property, fat and oil decomposition property and protein decomposition property, and particularly, Strain A + Strain B, and Strains C to F have high protein decomposition property. Mold of Strain G and yeasts of Strains H to J have high starch decomposition property and fat and oil decomposition property, but they are inferior to Strain A + Strain B, and Strain C to Strain F in protein decomposition property. Therefore, in order to efficiently decompose pollutants and sludge (particularly protein), the number of genus *Bacillus* bacteria in the tank to which the sludge flocculant and the nutrient have been added needs to be maintained at $2.0 \times 10^5$ to $111 \times 10^5$ cfu/mL.

The lower limit of the number of the bacteria is a numerical value determined by analyzing bacterial floras in a sewage treatment facility in each place and taking into consideration a gross yield coefficient of sludge and the number of genus *Bacillus* bacteria of experimental plants in literatures. Also in the experimental sewage treatment facility now being run, almost the same numerical value has been obtained.

Activated sludge process

It is said that activated sludge is produced when microorganisms present in sewage and wastewater explosively propagate and grow owing to decomposition of organic matters and supply of oxygen (aeration), and by the activated sludge, organic pollutants in sewage and wastewater are decreased (treated). In the actual circumstances, however, there are problems in the activated sludge process, such that the amount of sludge produced is large and the sludge treatment cost is high.

In the present specification, the wastewater treatment using activated sludge is generally called "activated sludge process". The activated sludge process is further subdivided by the technique to supply oxygen to the microorganisms (oxygen is not daringly supplied temporarily depending upon the system) and the mode of the subsequent step of separating activated sludge from a mixture of the sludge and water. The water tank to supply oxygen is called an "aeration tank 10".

In the wastewater treatment method (β) disclosed herein, activated sludge is placed in a water tank (aeration tank 10) made of reinforced concrete or steel plate, and air is supplied into the tank by an air blower (embodiments wherein air bubbles come out from the tank bottom are possible). If sewage or wastewater 1 is allowed to flow into the tank little by little, pollutants contained in the sewage or wastewater 1 are used as "food" for microorganisms (e.g., seed bacterial floras 2). Since the same amount of water containing the activated sludge as that of the influent sewage or wastewater 1 overflows, this water is allowed to flow into another water tank. This tank is called a sludge sedimentation tank 20. The activated sludge has a specific gravity higher than that of water, and therefore, it is precipitated and accumulated on the bottom. The sediment is allowed to flow into a sludge retention tank 30 by the use of a pump or the like and is temporarily retained therein, and this sludge is returned to an aeration tank 10 (this called "sludge returning"). A series of equipment designed so that these operations may be continuously carried out are used.

As shown in Fig. 5, such an activated sludge process typically includes at least the following steps (1) to (5):

a step (1): aeration step wherein sewage or wastewater 1 having a biochemical oxygen demand [BOD] of not less than 80 mg/L is allowed to flow into an aeration tank 10 equipped with an aeration device and a stirring device, to which seed bacterial floras 2 have been added, and the sewage or the wastewater is aerated and stirred to obtain a stirred liquid 11,

a step (2): separation step wherein the stirred liquid 11 obtained in the step (1) is allowed to flow into a sludge sedimentation tank 20 and allowed to stand still to separate the liquid into a supernatant liquid 21 and precipitated sludge 22, and then the supernatant liquid 21 is discharged out of the system as an effluent 23,

a step (3): retention and returning step wherein the precipitated sludge 22 obtained in the step (2) is withdrawn and retained in a sludge retention tank 30, and a part of the sludge is returned to the aeration tank 10,

a step (4): thickening step wherein the retained sludge obtained in the step (3) is thickened by a sludge thickening tank 40 and/or a centrifugal thickening machine 60, and

a step (5): retention and discharge step wherein the thickened sludge obtained in the step (4) is retained in a thickened sludge retention tank 50, and a part of the sludge is discharged out of the system.

As methods to treat wastewater, such as sewage (e.g., sewage and domestic wastewater), laboratory wastewater, industrial wastewater, livestock wastewater and sludge treated water, using the above activated sludge process, there are three kinds of treatment methods, as previously described.

As previously described, the treatment methods are divided into a continuous treatment method usually called a "standard method", a treatment method called a sequencing batch reactor method and an OD treatment method.

In the case of, for example, the sequencing batch reactor method, as shown in Fig. 7, there are treatment equipment of 4 tanks, and wastewater is introduced into first and second sequencing batch reactors 70, each of which is equipped with an aeration device, a stirring device and a drainage device, and is subjected to activated sludge treatment therein, then the sludge precipitated on the bottom of both the sequencing batch reactors 70 is withdrawn and transferred into a sludge retention tank 30 (also referred to as a "first excess sludge tank"). This sludge is further thickened, retained in a thickened sludge retention tank 50 (also referred to as a "second excess sludge tank"), properly discharged from the tank, subjected to dehydration and then subjected to landfilling, incineration or the like.

On the other hand, the supernatant liquid in the sequencing batch reactors 70 is drawn up by the drainage device and discharged into a river. In many cases, the raw water is introduced into a treatment tank after the water quality and the concentration of the influent wastewater are averaged in advance in an equalizing tank.

Sewage or wastewater, supernatant liquid and effluent

"Sewage or wastewater 1" (also referred to "wastewater", "raw water", "raw wastewater" or "sewage" simply in this specification) is sewage having a biochemical oxygen demand [BOD] of not less than 80 mg/L, and may contain human wastes and swine urine.

BOD of wastewater, BOD of human wastes and BOD of swine urine are preferably in the ranges of 80 to 600 mg/L, 7,000 to 12,000 mg/L, and 20,000 to 40,000 mg/L, respectively.

BOD of the "supernatant liquid 21" is preferably not more than 1% of the BOD of the "sewage or wastewater 1"

In order to discharge such wastewater to a public water area after the treatment, regulations that the BOD is not more than 20 mg/L must be observed. Therefore, when the BOD of the "supernatant liquid 21" becomes not more than 20 mg/L, it is discharged out of the system as an "effluent 23".

Aeration device

In the aeration tank 10, an aeration device and a stirring device are installed, as shown in Fig. 5.

As shown in Fig. 6, an embodiment of the aeration tank 10 may be applicable to a conventional continuous treatment, in which two or more tanks are connected in series. In a first treatment tank 12, an anaerobic treatment is performed by only stirring without aeration, and aeration and stirring is performed in a second treatment tank 13 and its subsequent treatment tanks, to which seed bacterial flora 2 are added.

By temporarily stopping the aeration and stirring functions of such an aeration tank 10, the aeration tank 10 can be used also as the sludge sedimentation tank 20, as shown in Fig. 7.

Seed bacterial flora

As the "Seed bacterial flora 2" added to the aeration tank 10, Strain A, Strain B and Strain C are preferably used.

As the strains proved to show night soil decomposition property, any other strains than a combination of Strain A and Strain B (non patent literature 1) and Strain C have not been known. Also internationally, any other night soil-decomposing strains or pollutant-decomposing strains have not been known (or have not been specified).

When the wastewater treatment method is carried out using a combination of genus *Bacillus* bacteria and microorganisms other than the genus *Bacillus* bacteria (e.g., molds and yeasts) as seed bacterial flora, the sludge reduction (dry weight; compared to the usual) can be raised to not less than 50%, and the sludge reduction ratio in 2007 was 62.75% (gross yield coefficient of sludge: 28.376%).

On the other hand, in an agricultural village wastewater treatment facility (OD treatment method was adopted, and industrial wastewater did not flow into this facility), a conventional wastewater treatment method wherein aeration was performed in a sludge retention tank was carried out using Strain A to Strain J as the seed bacterial flora 2a instead of Strains A to C, from March, 2010, and from May to July, sludge reduction of 25 to 30% was confirmed. In this conventional wastewater treatment method, aeration was performed in the sludge retention tank, and into an OD tank and each of sludge retention tanks (3 tanks in all), 0.01 to 0.5 g of $Al_2O_3$, 0.01 to 2.0 g of $SiO_2$, 0.01 to 0.5 g of MgO and 0.8 to 250 mg of peptone (per $m^3$ of each tank and per day) were added based on 1 g/l of MLSS, as treatment accelerators. Since the nitrogen content in the influent was high, a nitrogen source was not added. Data from the middle of July, 2010 to October 30, 2010 could not be obtained because failures of the aeration device and the stirring device occurred. As the reasons why the sludge reduction ratio did not reach 50% in this case, there can be considered: (1) differently from the wastewater treatment method disclosed herein, sludge returning, etc. were not performed, (2) values of the sludge concentrations in the aeration tank 10 and the sludge retention tank 20 could not be obtained in the early stage, so that a countermeasure could not be taken, (3) the amount of influent pollutants and the amount of discharge sludge could not be precisely grasped, and (4) failures frequently occur in the aeration device, etc. in the facility.
The Strains A to C will be described in detail in the working examples.

When an experimental plant was used, the gross yield coefficient of sludge was 15.3% (residence time: 12 to 15 hours, water temperature: 12 to 24°C), as described in the non patent literature 2. From this value, it can be presumed that sludge reduction of not less than 80% can be attained as compared with a treatment facility having a gross yield coefficient of sludge of 90%. From this, it is thought that even if seed bacterial flora is not added, sludge reduction of not less than 50% is possible. However, this value is obtained by the use of an experimental plant (total volume of 4 tanks: 3.6 $m^3$), and sludge reduction is more easily attained than in the case of using real equipment. This is attributable to that when growth inhibition occurs in the experimental plant, operations such as control of aeration rate and withdrawal of sludge are easily made, and the influence of the growth inhibition can be suppressed low.

Pollutant-highly decomposing bacterial floras

It is preferable that pollutant-highly decomposing bacterial floras are derived from the seed bacterial flora 2 after the lapse of a given period of time in the wastewater treatment method disclosed herein.

It is preferable that the pollutant-highly decomposing bacterial flora have starch decomposition property and fat and oil decomposition property and have a suspended solid [SS] removal ratio, said SS being contained in a cooked meat medium (Oxoid), of not less than 70% and a suspended solid [SS] removal ratio, said SS being contained in a cooked meat medium (Difco), of not less than 60%. The SS removal ratio, said SS being contained in a cooked meat medium (Oxoid), is more preferably not less than 80%.

As the cooked meat medium, "COOKED MEAT MEDIUM" (OXOID code: CMOO81) manufactured by Oxoid and "Difco (trademark) Cooked Meat Medium" (catalogue No. 226730) manufactured by Difco are used, respectively.

The composition of the cooked meat medium (Oxoid) (per liter) is as follows: heart muscle (dry) 73.0 g, peptone 10.0 g, Lab Lemco powder 10.0 g, sodium chloride 5.0 g and glucose 2.0 g. The composition of the cooked meat medium (Difco) (per liter) is as follows: bovine heart muscle (dry) 98.0 g, proteose peptone 20.0 g, glucose 2.0 g and sodium chloride 5.0 g.

In general, protein decomposition property is evaluated in terms of albumin decomposition property, casein decomposition property, gelatin decomposition property, etc. However, when casein or gelatin is used for evaluating protein decomposition property, there are many decomposing strains, and it is difficult to obtain an index of pollutant decomposition property. Therefore, the present inventor has originally introduced evaluation of protein decomposition property using cooked meat media.

When about 300 mg of a cooked meat medium (Oxoid) and about 300 mg of a cooked meat medium (Difco) were each suspended in 6 mL of water and shaken for 10 days, the SS residue in the case of Oxoid was 49.7%, and the SS residue in the case of Difco was 68.4%. From this, these two media proved to be greatly different from each other in properties.

It is preferable that when Strains A to C are used as seed bacterial flora, the pollutant-highly decomposing bacterial flora contain at least one kind of genus *Bacillus* bacteria selected from the group consisting of Strain D, Strain E and Strain F, or contain at least one kind of the genus *Bacillus* bacteria and Strain G that is mold and/or at least one kind of yeast selected from the group consisting of Strain H, Strain I and Strain J.

The cooked meat media can be decomposed by limited strains, and for example, genus *Clostridium* bacteria, genus *Bacteroid* bacteria, genus *Serratia* bacteria, etc. are known. These pollutant-highly decomposing bacterial floras will be also described in detail in the working examples.

Sludge flocculant and nutrient

By adding a sludge flocculant and a nutrient (both being also sometimes referred to as "treatment accelerators" simply in this specification) to the aeration tank 10, and the sludge retention tank 30 equipped with the device and/or the thickened sludge retention tank 50 equipped with the device, said tanks 30 and 50 being equipped with at least an aeration device selected from an aeration device and a stirring device, efficiency of the wastewater treatment can be enhanced.

A nitrogen source is preferably added to the sludge retention tank 30 equipped with the device and/or the thickened sludge retention tank 50 equipped with the device together with the sludge flocculant and the nutrient.

The sludge flocculant preferably contains an aluminum compound, and a silicon compound and/or a magnesium compound. The nutrient is preferably peptone and/or a dry yeast extract. The nitrogen source is preferably one or more substances selected from the group consisting of urea, ammonium sulfate, ammonium chloride and ammonium nitrate.

The amounts of the above compounds added based on 1 g/l of a mixed liquor suspended solid [MLSS, activated sludge floating matters in mixed liquid in aeration tank] in a tank are set forth in the following table (each amount being an amount per cubic meter [$m^3$] of the tank and per day). MLSS means floating activated sludge in sewage in the aeration tank.

Table 1: Amounts of sludge flocculant, nutrient and nitrogen source added

| | | Aeration tank 10 | Sludge retention tank 30 equipped with device | Thickened sludge retention tank 50 equipped with device |
|---|---|---|---|---|
| Sludge flocculant | Aluminum compound | 0.01-0.5 g (in terms of aluminum oxide [$Al_2O_3$]) | | |
| | Silicon compound | 0.01- 2 g (in terms of silicon dioxide [$SiO_2$]) | | |
| | Magnesium compound | 0.01-0.5 g (in terms of magnesium oxide [MgO]) | | |
| Nutrient | Peptone | 0.8-70 mg | 3.5-250 mg | 2.0-150 mg |
| | Yeast extract | 0.1-10 mg | 0.7-45 mg | 0.4-25 mg |
| Nitrogen source (in terms of $N_2$) | | - | 0.1-15 g | 1-150 mg |

Wastewater treatment system

As shown in Figs. 5 to 7, the wastewater treatment system disclosed herein comprises, in a wastewater treatment using the aforesaid activated sludge process,

installing at least an aeration device selected from an aeration device and a stirring device in the sludge retention tank 30 and/or the thickened sludge retention tank 50, and performing the aforesaid sludge returning (I) and/or (II), adding a sludge flocculant and a nutrient to one or more tanks of the aeration tank 10, the sludge retention tank 30 equipped with the device and the thickened sludge retention tank 50 equipped with the device, and
maintaining the number of genus *Bacillus* bacteria in the tank, to which the sludge flocculant and the nutrient have been added, at $2.0\times10^5$ to $111\times10^5$ cfu/mL.

As shown in Fig. 6, an embodiment of the aeration tank 10 used in the wastewater treatment system may be applicable to a conventional continuous treatment, in which two or more tanks are connected in series, and in a first treatment tank 12, an anaerobic treatment is carried out only by stirring without aeration, and to a second treatment tank 13 and its subsequent treatment tanks, seed bacterial flora 2 are added, and aeration and stirring are performed.
As shown in Fig. 6, by temporarily stopping the aeration and stirring functions of the aeration tank 10, the aeration tank 10 can be used also as the sludge sedimentation tank 20.
Compounds used for the sludge flocculant, and the nutrient in the wastewater treatment system, and amounts of the compounds, a compound used as a nitrogen source added together with these treatment accelerators, and an amount of compound are the similar to same as those previously described.

Method for measuring pollutant decomposition activity of activated sludge microorganisms

The method disclosed herein for measuring pollutant decomposition activity of activated sludge microorganisms comprises calculating a SS removal ratio from the following formula (i) using a dry weight (X) of SS obtained after bacterial inoculation and culturing in the cooked meat medium and a dry weight (Y) of SS obtained after culturing without bacterial inoculation in the cooked meat medium;

$$\text{SS removal ratio (\%)} = \{(Y-X)/Y\}\times100 \qquad (i)$$

thereby measuring pollutant decomposition performance of activated sludge microorganisms contained in the seed bacterial floras or in the pollutant-highly decomposing bacterial floras.
In this method, starch decomposition property and oil decomposition property are also preferably taken into consideration.
The methods for measuring starch decomposition property and oil decomposition property are described later.
The BOD component removal ratio can be measured in accordance with the method described in JIS K 0102·16. The method is briefly described below.
The amount of dissolved oxygen [DO] contained in test water and consumed by microorganisms (cultured for 5 days) is measured, and the amount measured is expressed in mg/L. First, two "oxygen bottles" of known volume (e.g., 200 mL) are prepared based on each dilution level, and a half of each bottle is filled with diluting water. The dilution level of test water is gradated by 1/2. Into two bottles for first concentration, a given amount (e.g., 40 mL) of test water is introduced, and the space of each bottle is filled with diluting water. Likewise, test water, in a gradated amount by 1/2 (e.g., 20 mL), is added to a pair of oxygen bottles, and the space of each bottle is filled with diluting water to prepare test water of each level concentration (e.g., 10 mL, 5 mL, 2.5 mL, etc.). After 5 minutes, the amount of dissolved oxygen (A [mg/L]) in one bottle in each dilution level is measured, and the other bottle in each level is closed, followed by culturing at 20°C for 5 days. After culturing, the amount of dissolved oxygen is measured, and a numerical value in the dilution level showing a value of 3.5 to 6 mg/L is adopted as the amount of dissolved oxygen (B [mg/L]). The BOD value is calculated from the equation: BOD value [mg/L] = (A-B) × dilution ratio. When seeding is performed, the value obtained is corrected. The amount of dissolved oxygen is measured by Winkler sodium azide method (JIS K 0102·24·3) or a dissolved oxygen meter (mainly in the field).

The methods disclosed herein are further described with reference to the following examples.

EXAMPLES

At the beginning of December, 2006, seed bacteria were added, then the wastewater treatment method of the present invention was started, and activated sludge treatment was carried out in the following manner.

The sewage treatment facility (the Public Sewage Work Nagamine Purification Management Center in Nakano-shi, Nagano-ken) used in the examples was constituted of two sequencing batch reactors 70 (maximum volume of each tank: 365 $m^3$), a sludge retention tank 30 (maximum volume: 40 $m^3$) and a thickened sludge retention tank 50 (maximum volume: 20 $m^3$), in each of which an aeration device, a stirring device and a treated water withdrawal device were installed, and a centrifugal thickening machine 60 (sludge can be thickened to at most 4.5 times and is thickened to 4 times on the average), as shown in Fig. 7.

In this sewage treatment facility, a device to return sludge from a sludge retention tank 31 to a sequencing batch reactor 70 was only arranged (in usual, the device to return sludge is not arranged in a sequencing batch reactor type treatment facility), and in the sludge retention tank 30 and the thickened sludge retention tank 50, any of an aeration device, a stirring device and a treated water withdrawal device was not arranged.

Then, such routes to perform sludge retuning (i) to (iii) as described previously were newly arranged.

Further, an aeration device and a stirring device were newly installed in each of the sludge retention tank 30 and the thickened sludge retention tank 50. However, the aeration device installed in the thickened sludge retention tank 50 was used for the main purpose of air-stirring by setting a pipe to the tank, and the stirring device was used as an assistant. When the MLSS concentration in the thickened sludge retention tank 50 is not less than 15,000 mg/L, aeration cannot be normally carried out.

The amount of inflow of sewage or wastewater 1 (also referred to as "raw water" hereinafter) was 184.8 $m^3$/day (2005) to 184.9 $m^3$/day (2009), and the residence time was about 4 days. Inflow of raw water was changed at intervals of 6 hours, and operations of 4 cycles a day were carried out. In each cycle, aeration and stirring of two times (total: 6 hours) were conducted, and sedimentation of 3 hours and discharge of a supernatant liquid 21 were conducted. The reason is that operations under these conditions resulted in best sludge sedimentation performance.

When the aeration level in the sequencing batch reactor 70 was expressed in terms of ORP, the ORP was 50 to 300 mV (usually 100 to 280 mV); when the aeration level in the sludge retention tank 30 was expressed in terms of ORP, the ORP was -50 to 300 mV (usually 100 to 280 mV); and when the aeration level in the thickened sludge retention tank 50 was expressed in term of ORP, the ORP was -350 to -100 mV (usually -300 to -100 mV).

By the use of the centrifugal thickening machine 60 to thicken sludge in the sludge retention tank 30, sludge of 3 $m^3$/day in the sludge retention tank 30 was thickened to that of 1 $m^3$/day on the average in 2005, but in 2009, sludge of 4.2 to 4.8 $m^3$/day was thickened to that of 1 $m^3$/day on the average.

The amount of return sludge in the sludge returning (i) based on the amount of influent raw water is 15 to 50% (maximum: usually 70%) in the conventional standard process and is 10 to 30% in the sequencing batch reactor process. On the other hand, it was about 11 to 16% (corresponding to 2.7 to 4.1% based on the tank volume of the sequencing batch reactor 70) in the examples.

The amount of return sludge in the sludge returning (iii) based on the amount of influent raw water is 1.6 to 6% (corresponding to 7.5 to 30% based on the tank volume of the sludge retention tank 30) in the facility equipped with a sludge thickening machine. On the other hand, it was 1.6 to 2.8%/each time·twice a week (corresponding to 7.5 to 12.5%/each time·twice a week based on the tank volume of the sludge retention tank 30) on the average in the examples (see Japanese Patent Laid-Open Publication No. 189991/2000 and Japanese Patent Laid-Open Publication No. 216789/1998).

Example 1, Comparative Example 1

In Example 1, a sludge retention tank 12a and a thickened sludge retention tank 13a shown in Fig. 4, both being capable of performing aeration and stirring, and a device capable of performing a first sludge returning step Va, were installed in a sequencing batch reactor type activated sludge treatment apparatus shown in Fig. 2, and the apparatus was used.

In Comparative Example 1, a sequencing batch reactor type activated sludge treatment apparatus shown in Fig. 2 was used, and the results obtained from the beginning of January, 2005 to the end of December, 2005 are set forth. The first excess sludge retention tank 8a and the second excess sludge tank 9a in Comparative Example 1 had no devices for aeration and stirring. In this period of time, however, the apparatus had a device for use in the sludge returning step and capable of returning sludge from the first excess sludge tank 8a to the sequencing batch reactor.

Into the first sequencing batch reactor 2a and the second sequencing batch reactor 3a each of which was a treatment tank having a maximum volume of 365 $m^3$, sewage of Nagamine area, Nakano-shi, Nagano-ken was allowed to flow as raw water, and operations of 4 cycles were carried out. In each cycle, aeration and stirring were carried out twice. The facility was operated in a treatment amount (= amount of discharge water, i.e., amount of influent water) of about 45 $m^3$ in one cycle.

As seed bacteria, *Bacillus thuringiensis* Strain A, *Bacillus subtilis* Strain B and *Bacillus subtilis* Strain C were added to the first sequencing batch reactor 2a, the second sequencing batch reactor 3a and the first excess sludge tank 8a.

During this operation, withdrawal of sludge from both of the sequencing batch reactors in the total maximum amount of about 30 $m^3$/day (= amount of return sludge) and sludge returning were carried out. The amount of sewage treated was about 185 $m^3$/day. In the treatment operations, the first sludge returning step Va of the maximum amount corresponding to 16% of the amount of influent raw water was carried out. When the number of genus *Bacillus* bacteria in each sequencing batch reactor decreased down to about $3\times10^5$ cfu/mL, the amount of withdrawn excess sludge and the amount of return sludge were increased to maintain the number of pollutant-decomposing microorganisms (genus *Bacillus* bacteria as an index) having pollutant decomposition activity at $2.0\times10^5$ to $22.5\times10^5$ cfu/mL.

The number of microorganisms (number of genus *Bacillus* bacteria) in the treatment water (raw water, treated water), the water quality (BOD), the total nitrogen [T-N] and the total amount of phosphorus compounds [T-P] were measured twice a month, and a monthly average value was calculated. The resulting value is expressed in terms of an annual average value. Regarding the number of microorganisms, the total number of bacteria and the number of genus *Bacillus* bacteria were measured once a week. The amount of influent raw water and the inflows and removal ratios (annual average) of BOD and SS are set forth in Table 2, and the amounts of influent T-N and T-P and the removal ratios thereof are set forth in Table 3.

The total aeration time (per year and per day) in the treatment tanks is set forth in Table 4. The ORP was maintained at 100 to 270 mV (DO: 1.0 to 1.1 mg/L).

As indexes of pollutant decomposition property, the amount of discharged sludge, the sludge reduction ratio and the gross yield coefficient of sludge are set forth in Table 5.

The measured values for the numbers of microorganisms (numbers of genus *Bacillus* bacteria) in the first sequencing batch reactor 2a and the first excess sludge tank 8a in Example 1 are set forth in Table 6. For the main purpose of maintaining sedimentation property, the MLSS concentrations in both the sequencing batch reactors were controlled by increasing or decreasing the amount of sludge withdrawn, and as a result, the MLSS concentrations in both the sequencing batch reactors were maintained at 2,700 to 4,300 mg/L (MLSS concentrations in both the sequencing batch reactors in Comparative Example 1: 1,250 to 2,150 mg/mL).

Table 2: Inflow of raw water, inflow and removal ratio of BOD and SS

| | Inflow of raw water ($m^3$) | | BOD (mg/L), annual average value | | | SS (mg/L), annual average value | | |
|---|---|---|---|---|---|---|---|---|
| | Annual | Daily average | Raw water | Effluent | Removal ratio (%) | Raw water | Effluent | Removal ratio (%) |
| the year 2005 (Comp. Ex. 1) | 67,444 | 184.8 | 235.3 | 1.35 | 99.426 | 239.3 | 1.8 | 99.25 |
| the year 2007 (Ex. 1) | 67,796 | 185.7 | 289.2 | 0.86 | 99.703 | 361.3 | 2.0 | 99.45 |

As is apparent from Table 2, in Example 1, in spite that the amount of influent BOD in the wastewater markedly increased, the removal ratios of BOD and SS were remarkably improved as compared with those of Comparative Example 1.

Table 3: Amount of T-N, amount of T-P and removal ratio (average value between Jan. and Dec.)

| | T-N (mg/L), annual average value | | | T-P (mg/L), annual average value | | |
|---|---|---|---|---|---|---|
| | Raw water | Effluent | Removal ratio (%) | Raw water | Effluent | Removal ratio (%) |
| the year 2005 (Comp. Ex. 1) | 39.8 | 1.9 | 95.4 | 5.4 | 1.4 | 74.1 |
| the year 2007 (Ex. 1) | 44.2 | 3.2 | 92.7 | 6.1 | 2.1 | 65.6 |
| *Notes: The amount of T-N added is not contained in the raw water T-N value. | | | | | | |

Table 4: Total aeration time in sequencing batch reactors (aeration rate: $5.25m^3/min$)

| | Aeration time (hr/year) | Aeration time (hr/day) |
|---|---|---|
| the year 2005 (Comp. Ex. 1) | 4,199.9 | 11.51 |
| the year 2007 (Ex. 1) | 5,359.0 | 14.68 |

Table 5: Amount of raw water BOD, BOD removal ratio, amount of discharged sludge and gross yield coefficient of sludge

| | Amount of influent BOD (kg /year) | Amount of removed BOD (kg) | BOD removal ratio (%) | Amount of discharged sludge (kg, dry) | Sludge reduction ratio (%) | Gross yield coefficient of sludge (%) |
|---|---|---|---|---|---|---|
| the year 2005 (Comp. Ex. 1) | 15,869.6 | 15,778.5 | 99.426 | 14,890 | 0 | 94.366 |
| the year 2007 (Ex. 1) | 19,606.6 | 19,548.4 | 99.703 | 5,547 | 62.745 | 28.376 |
| *Notes 1: The amount of discharged sludge is a value obtained by correction of the amount of sequencing batch reactors sludge increased.<br>Notes 2: Sludge reduction ratio = 100 × (weight of discharged sludge of Comp. Ex. 1 - weight of discharged sludge of Ex. 1)/weight of discharged sludge of Comp. Ex. 1<br>Notes 3: gross yield coefficient of sludge (%) = 100 × (weight of increased sludge/amount of removed BOD) | | | | | | |

In Comparative Example 1, because of inflow of growth inhibitory substances considered to be industrial wastewater containing poisonous substances, the activated sludge microorganism group frequently became in a state of shocking conditions during runs, so that withdrawal of sludge was carried out in order to improve sedimentation property. On January 29, February 26, March 26, April 16 and April 26, the microorganism group became in a state of serious shocking conditions accompanied by decrease in the number of genus *Bacillus* bacteria (except January 29 and February 26), and sedimentation was inhibited. Therefore, the amount of sludge withdrawn and the amount of return sludge were increased, whereby the number of genus *Bacillus* bacteria was recovered to a normal value. In June, swell of sludge took place, and sedimentation property was deteriorated. Therefore, on June 4, June 11, June 18, June 25 and July 2, 1.5 L portions of a flocculant (poly aluminium chloride [pac] represented by the formula $[Al_2(OH)_n \cdot Cl_{6-n}]_m$ wherein n and m are numbers satisfying the conditions of $1 \le n \le 5$ and $m \le 10$) were added to the sequencing batch reactors, followed by running. As a result, fine bubbles rose to the surface on July 30, and sedimentation property was improved.

The sludge reduction ratio in Example 1 was 62.745% and was extremely higher as compared with that in Comparative Example 1. In Comparative Example 1, the decomposition property was low in spite that the number of genus *Bacillus* bacteria before addition of seed bacteria was as extraordinarily large as about $6 \times 10^5$ cfu/mL.

Table 6: Number of genus *Bacillus* bacteria ($\times 10^5$ cfu/mL)

| Date of measurement | | First sequencing batch reactor 2a | Sludge retention tank 12a | Remarks |
|---|---|---|---|---|
| 2006 | Dec. 4 | 5.00 | 7.00 | before introduction of seed bacteria |
| | | 6.00 | 7.80 | after introduction of seed bacteria |
| | Dec. 18 | 6.25 | 9.00 | - |
| | Dec. 28 | 11.3 | 27.5 | germination in excess sludge tank |
| 2007 | Jan. 8 | 8.25 | 10.5 | - |
| | Jan. 22 | 9.75 | 9.70 | - |
| | Feb. 5 | 11.3 | 21.0 | germination of seed bacteria in each tank |
| | Feb. 19 | 22.5 | 19.5 | - |
| | Mar. 5 | 15.3 | 21.8 | - |
| | Mar. 25 | 21.0 | 13.8 | - |
| | Apr. 9 | 15.8 | 17.5 | many filamentous bacteria observed |
| | Apr. 26 | 3.50 | 8.00 | decrease in genus *Bacillus* bacteria: addition of seed bacteria to excess sludge tank |
| | Mav 14 | 9.25 | 8.00 | - |
| | May 28 | 8.50 | 9.50 | decrease in number of genus *Bacillus* bacteria previous week The amount of return sludge from first excess sludge tank was doubled. |
| | Jun. 11 | 7.20 | 11.5 | - |
| | Jun. 25 | 8.25 | 14.3 | - |
| | Jul. 9 | 7.50 | 13.3 | - |
| | Jul. 23 | 8.00 | 11.3 | - |
| | Aug. 13 | 12.3 | 17.0 | decrease in number of genus *Bacillus* bacteria previous week stop of sludge withdrawal and return |

| Date of measurement | | First sequencing batch reactor 2a | Sludge retention tank 12a | Remarks |
|---|---|---|---|---|
| 2007 | Aug. 27 | 3.25 | 10.0 | decrease in number of genus *Bacillus* bacteria |
| | Sep. 10 | 6.50 | 14.0 | - |
| | Sep. 25 | 8.25 | 14.0 | good operation in all tanks |
| | Oct. 15 | 13.3 | 19.5 | - |
| | Oct. 29 | 8.50 | 16.3 | - |
| | Nov. 5 | 14.0 | 16.8 | - |
| | Nov. 19 | 9.00 | 13.5 | - |
| | Nov. 26 | 10.3 | 18.8 | occurrence of filamentous bacteria |
| | Dec. 3 | 4.74 | 9.00 | - |
| | Dec. 17 | 12.5 | 14.3 | - |

Example 2

In Example 2, the wastewater treatment method (α) of the present invention was carried out from January to December, 2008 in the same manner as in Example 1. In this period, sludge returning (second sludge returning step Wa in Fig. 4) from the thickened sludge retention tank 13a, in which aeration and stirring had been performed, to the sludge retention tank 12a was carried out in an amount of 25%/week based on the amount of the sludge in the first excess sludge tank.

The amount of influent raw water and the inflows and removal ratios (annual average) of BOD and SS (suspended solid) are set forth in Table 7, and the amounts of influent T-N and T-P and the removal ratios thereof are set forth in Table 8.

The total aeration time (per year and per day) in the treatment tanks is set forth in Table 9.

As indexes of pollutant decomposition property, the amount of discharged sludge, the sludge reduction ratio and the gross yield coefficient of sludge are set forth in Table 10.

The measured values for the numbers of microorganisms (numbers of genus *Bacillus* bacteria) in the first sequencing batch reactor 2a and the sludge retention tank 12a in Example 2 are set forth in Table 11. For the main purpose of maintaining sedimentation property, the MLSS concentrations in both the sequencing batch reactors tanks were controlled by increasing or decreasing the amount of sludge withdrawn, and as a result, the MLSS concentrations in both the sequencing batch reactors were maintained at 2,200 to 4,200 mg/L (MLSS concentrations in both the sequencing batch reactors in Comparative Example 1: 1,250 to 2,150 mg/mL).

Table 7: Inflow of raw water, inflow and removal ratio of BOD and SS

| | Inflow of raw water ($m^3$) | | BOD (mg/L), annual average value | | | SS (mg/L), annual average value | | |
|---|---|---|---|---|---|---|---|---|
| | Annual | Daily average | Raw water | Effluent | Removal ratio (%) | Raw water | Effluent | Removal ratio (%) |
| the year 2005 (Comp. Ex. 1) | 67,444 | 184.8 | 235.3 | 1.35 | 99.426 | 239.3 | 1.8 | 99.25 |
| the year 2008 (Ex. 2) | 67, 946 | 186.2 | 282.0 | 0.75 | 99.734 | 347.6 | 0.4 | 99.88 |

Table 8: Amount of T-N, amount of T-P and removal ratio (average value between Jan. and Dec.)

| | T-N (mg/L), annual average value | | | T-P (mg/L), annual average value | | |
|---|---|---|---|---|---|---|
| | Raw water | Effluent | Removal ratio (%) | Raw water | Effluent | Removal ratio (%) |
| the year 2005 (Comp. Ex. 1) | 39.8 | 1.9 | 95.4 | 5.4 | 1.4 | 74.1 |
| the year 2008 (Ex. 2) | 43.5 | 2.4 | 94.4 | 5.9 | 1.9 | 67.8 |
| *Notes: The amount of T-N added is not contained in the raw water T-N value. | | | | | | |

Table 9: Total aeration time in sequencing batch reactors (aeration rate: 5.25$m^3$/min)

| | Aeration time (hr/year) | Aeration time (hr/day) |
|---|---|---|
| the year 2005 (Comp. Ex. 1) | 4,199.9 | 11.51 |
| the year 2008 (Ex. 2) | 5,126.5 | 14.05 |

Table 10: Amount of raw water BOD, BOD removal ratio, amount of discharged sludge and gross yield coefficient of sludge

| | Amount of influent BOD (kg/year) | Amount of removed BOD (kg) | BOD Removal ratio (%) | Amount of discharged sludge (kg, dry) | Sludge reduction ratio (%) | Gross yield coefficient of sludge (%) |
|---|---|---|---|---|---|---|
| the year 2005 (Comp. Ex. 1) | 15,869.6 | 15,778.5 | 99.426 | 14,890 | 0 | 94.366 |
| the year 2008 (Ex. 2) | 19,160.8 | 19,109.8 | 99.734 | 8,187 | 45.014 | 42.891 |
| *Notes 1: The amount of discharged sludge is a value obtained by correction of the amount of sequencing batch reactors sludge increased.<br>Notes 2: Sludge reduction ratio = 100 × (weight of discharged sludge of Comp. Ex. 1 - weight of discharged sludge of Ex. 2)/weight of discharged sludge of Comp. Ex. 1<br>Notes 3: Gross yield coefficient of sludge (%) = 100 × (weight of increased sludge/amount of removed BOD) | | | | | | |

As shown in Table 10, by performing sludge returning (second sludge returning step Wa in Fig. 4) from the thickened sludge retention tank 13a to the sludge retention tank 12a, remarkable improvement in removal of pollutants and sludge reduction ratio was observed.

Table 11: Number of genus *Bacillus* bacteria (×$10^5$ cfu/mL) (the year 2008)

| Date of measurement | First sequencing batch reactor 2a | Sludge retention tank 12a | Remarks |
|---|---|---|---|
| Jan. 7 | 13.5 | 16.3 | - |
| Jan. 21 | 14.8 | 18.5 | - |
| Feb. 4 | 10.5 | 17.0 | - |
| Feb. 18 | 9.25 | 10.5 | - |
| Mar. 3 | 6.75 | 18.5 | - |
| Mar. 17 | 11.8 | 17.3 | - |
| Apr. 7 | 10.5 | 9.75 | - |
| Apr. 21 | 5.28 | 8.75 | - |
| May 12 | 4.00 | 14.5 | - |
| May 26 | 4.75 | 9.50 | - |
| Jun. 9 | 3.75 | 12.3 | 20 $m^3$ return from first excess sludge tank |
| Jun. 30 | 5.25 | 17.3 | - |
| Jul. 14 | 4.75 | 17.0 | - |
| Jul. 28 | 4.25 | 9.80 | - |
| Aug. 4 | 6.0 | 8.0 | - |
| Aug. 18 | 10.5 | 16.8 | - |
| Sep. 8 | 8.50 | 17.0 | - |
| Sep. 22 | 6.50 | 17.3 | - |
| Oct. 6 | 6.50 | 25.6 | - |

(continued)

| Date of measurement | First sequencing batch reactor 2a | Sludge retention tank 12a | Remarks |
|---|---|---|---|
| Oct. 20 | 7.50 | 21.0 | - |
| Nov. 3 | 14.5 | 33.8 | - |
| Nov. 17 | 15.3 | 23.0 | - |
| Dec. 1 | 10.3 | 24.5 | - |
| Dec. 15 | 8.50 | 30.3 | - |

It is apparent from the numbers of genus *Bacillus* bacteria that by performing sludge returning (second sludge returning step Wa) from the thickened sludge retention tank 13a to the sludge retention tank 12a and sludge returning (first sludge returning step Va) from the sludge retention tank 12a to the first sequencing batch reactor 2a and to the second sequencing batch reactor 3a, the number of genus *Bacillus* bacteria was recovered in the early stage, and stable treatment operations became possible, though the aeration rate was not particularly changed.

Example 3

In Example 3, the wastewater treatment method ($\alpha$) of the present invention was carried out from January to December, 2009 in the same manner as in Example 2, except for further adding treatment accelerators and nutrients. That is to say, the wastewater treatment method ($\beta$) disclosed herein was carried out in Example 3. In this period, sludge returning (second sludge returning step Wa in Fig. 4) from the thickened sludge retention tank 13a, in which aeration and stirring had been performed, to the sludge retention tank 12a was carried out in an amount of 25%/week based on the amount of the sludge in the sludge retention tank 12a.

In Example 3, further, as treatment accelerators (flocculants) and nutrients, 450 g of $SiO_2$, 230 g of $Al_2O_3$, 680 g of MgO, 17.6 g of peptone and 3.5 g of a dry yeast extract were added to each sequencing batch reactor (first sequencing batch reactor 2a and second sequencing batch reactor 3a) twice a week. Immediately after the addition, the treatment accelerators added were adsorbed by flocs. In the flocs, the treatment accelerators were thickened to about 50 times.

Furthermore, 100 g of $SiO_2$, 55 g of $Al_2O_3$, 160 g of MgO, 17.6 g of peptone and 3.5 g of a dry yeast extract were added to the sludge retention tank 12a twice a week.

The amount of influent raw water, the inflows and removal ratios (yearly average) of BOD and SS are set forth in Table 12, and the amounts of influent T-N and T-P and the removal ratios thereof are set forth in Table 13.

The total aeration time (per year and per day) in the treatment tanks is set forth in Table 14.

As indexes of pollutant decomposition property, the amount of discharged sludge, the sludge reduction ratio and the gross yield coefficient of sludge are set forth in Table 15.

The measured values for the numbers of microorganisms (numbers of genus *Bacillus* bacteria) in the first sequencing batch reactor 2a and the sludge retention tank 12a in Example 3 are set forth in Table 16. For the main purpose of maintaining sedimentation property, the MLSS concentrations in both the sequencing batch reactors were controlled by increasing or decreasing the amount of sludge withdrawn, and as a result, the MLSS concentrations in both the sequencing batch reactors were maintained at 2,100 to 4,000 mg/L (MLSS concentrations in both the sequencing batch reactors in Comparative Example 1: 1,250 to 2,150 mg/mL) .

Table 12: Inflow of raw water, inflow and removal ratio of BOD and SS

| | Inflow of raw water ($m^3$) | | BOD (mg/L), annual average value | | | SS (mg/L), annual average value | | |
|---|---|---|---|---|---|---|---|---|
| | Annual | Daily average | Raw water | Effluent | Removal ratio (%) | Raw water | Effluent | Removal ratio (%) |
| the year 2005 (Comp. Ex. 1) | 67,444 | 184.8 | 235.3 | 1.35 | 99.426 | 239.3 | 1.8 | 99.25 |
| the year 2009 (Ex. 3) | 67,481 | 184.9 | 317.8 | 0.58 | 99.819 | 384.3 | 0.6 | 99.84 |

As shown in Table 12, in Example 3, in spite that the influent BOD increased by 35% as compared with Comparative Example 1, the effluent BOD decreased by 57% and the removal ratio was improved by 0.39%.

Table 13: Amount of T-N, amount of T-P and removal ratio (average value between Jan. and Dec.)

| | T-N (mg/L), annual average value | | | T-P (mg/L), annual average value | | |
|---|---|---|---|---|---|---|
| | Raw water | Effluent | Removal ratio (%) | Raw water | Effluent | Removal ratio (%) |
| the year 2005 (Comp. Ex. 1) | 39.8 | 1.9 | 95.4 | 5.4 | 1.4 | 74.1 |
| the year 2009 (Ex. 3) | 44.8 | 1.8 | 96.1 | 5.8 | 1.9 | 67.2 |
| *Notes: The amount of T-N added is not contained in the raw water T-N value. | | | | | | |

Table 14: Total aeration time in sequencing batch reactors (aeration rate: 5.25$m^3$/min)

| | Aeration time (hr/year) | Aeration time (hr/day) |
|---|---|---|
| the year 2005 (Comp. Ex. 1) | 4,199.9 | 11.51 |
| the year 2009 (Ex. 3) | 4,287.3 | 11.75 |

In both the sequencing batch reactors and the sludge retention tank 12a, DO was 1.0 to 1.1 mg/L, and ORP was maintained at 100 to 270 mV. In the thickened sludge retention tank 13a, ORP was -180 to -310 mV.

Table 15: Amount of raw water BOD, BOD removal ratio, amount of discharged sludge and gross yield coefficient of sludge

| | Amount of influent BOD (kg/year) | Amount of removed BOD (kg) | BOD removal ratio (%) | Amount of discharged sludge (kg, dry) | Sludge reduction ratio (%) | Gross yield coefficient of sludge (%) |
|---|---|---|---|---|---|---|
| the year 2005 (Comp. Ex. 1) | 15,869.6 | 15,778.5 | 99.426 | 14,890 | 0 | 94.366 |
| the year 2009 (Ex. 3) | 21,445.6 | 21,406.7 | 99.819 | 7,432 | 50.101 | 34.718 |
| *Notes 1: The amount of discharged sludge is a value obtained by correction of the amount of sequencing batch reactor sludge increased.<br>Notes 2: Sludge reduction ratio = 100 × (weight of discharged sludge of Comp. Ex. 1 - weight of discharged sludge of Ex. 3)/weight of discharged sludge of Comp. Ex. 1<br>Notes 3: Gross yield coefficient of sludge (%) = 100 × (weight of increased sludge/amount of removed BOD) | | | | | | |

As shown in Table 15, by performing the second sludge returning step Wa for returning sludge from the thickened sludge retention tank 13a to the sludge retention tank 12a and adding treatment accelerators and nutrients, the sludge reduction rate was reduced by 50% as compared with Comparative Example 1, and remarkable improvement in the sludge reduction ratio was observed.

As shown in Table 16, the numbers of genus *Bacillus* bacteria in the first sequencing batch reactor 2a and the sludge retention tank 12a were extremely stable all the year round, and the effects of the sludge returning, the treatment accelerators and the nutrients were clearly observed, and thus, enhancement of wastewater quality and high sludge reduction ratio were proved.

Table 16: Number of genus *Bacillus* bacteria (×$10^5$ cfu/mL) (the year 2009)

| Date of measurement | First sequencing batch reactor 2a | Sludge retention tank 12a |
|---|---|---|
| Jan. 5 | 12.8 | 29.4 |

(continued)

| Date of measurement | First sequencing batch reactor 2a | Sludge retention tank 12a |
|---|---|---|
| Jan. 19 | 14.8 | 25.8 |
| Feb. 2 | 9.50 | 20.8 |
| Feb. 16 | 10.3 | 15.8 |
| Mar. 2 | 6.00 | 25.8 |
| Mar. 16 | 5.75 | 15.3 |
| Apr. 6 | 10.5 | 15.5 |
| Apr. 20 | 6.75 | 20.0 |
| May 11 | 6.50 | 14.5 |
| May 25 | 11.5 | 19.3 |
| Jun. 8 | 6.00 | 18.3 |
| Jun. 22 | 5.00 | 18.0 |
| Jul. 6 | 5.50 | 15.3 |
| Jul. 27 | 5.25 | 13.3 |
| Aug. 3 | 4.50 | 11.3 |
| Aug. 17 | 6.25 | 9.75 |
| Sep. 7 | 5.25 | 9.75 |
| Sep. 24 | 4.75 | 12.8 |
| Oct. 5 | 5.75 | 18.8 |
| Oct. 19 | 6.50 | 17.8 |
| Nov. 2 | 4.75 | 19.0 |
| Nov. 16 | 5.25 | 16.0 |
| Dec. 7 | 5.25 | 13.5 |
| Dec. 25 | 3.50 | 13.5 |

In the sludge retention tank 12a, moreover, molds and yeasts having extremely high starch decomposition property, fat and oil decomposition property and cellulose decomposition property were found out. It is presumed that molds and yeasts, which had come flying naturally or had been contained in the raw water originally, acquired high pollutant decomposition property in the sludge retention tank 12a.

The high pollutant decomposition property was analyzed in addition to the effect of the wastewater treatment of the present invention having high efficiency, and as a result, it was found that in the conventional method, inflow of filamentous bacteria with the raw water and swell of sludge occur to deteriorate sedimentation property, and the sludge treatment efficiency was frequently lowered.

However, by virtue of return of the first excess sludge in the wastewater treatment method of the present invention, growth of filamentous bacteria in the sequencing batch reactor was weakened, and from the middle stage of the run, growth thereof came to be not observed. From the sludge retention tank 12a, mold identified as *Penicillium turbatum* was isolated, which was identified by the 28S rDNA base sequences and the gene tree. *Penicillium turbatum* is known as an antibiotic-producing fungus, and this inhibits growth of influent filamentous bacteria. This mold has strong starch decomposition property, fat and oil decomposition property and cellulose decomposition property, and contributes to pollutant decomposition in cooperation with Strain D, Strain E and Strain F that are genus *Bacillus* bacteria. This mold has been internationally deposited as *Penicillium turbatum* Strain G. Isolation was carried out by fishing of the mold that had appeared during bacterial analysis using the aforesaid method.

From the microscopic observation of sludge in the sludge retention tank 12a, growth of yeast was confirmed, and isolation was carried out. Three strains identified as *Geotrichum silvicola* (*Galactomyces geortrichum*) Strain H, *Pichia fermentans* Strain I and *Pichia guilliermondii* Strain J by the homology of the 26S rDNA base sequences and the gene tree were confirmed. These have been also internationally deposited.

These yeasts also have strong starch decomposition property, fat and oil decomposition property and cellulose decomposition property, and contribute to pollutant decomposition in cooperation with Strain D, Strain E and Strain F of the genus *Bacillus* bacteria.

That is to say, the added seed bacteria disappeared except Strain C in about July, 2007, and genus *Bacillus* bacteria having higher decomposition property begun to appear. From May to July, 2008, 3 strains of genus *Bacillus* bacteria having high decomposition property, i.e., Strain D, Strain E and Strain F that are relative to Strain C, appeared. In addition to the genus *Bacillus* bacteria having high decomposition property, molds and yeasts exhibiting pollutant decomposition property and cellulose decomposition property appeared from January 2009, and contributed to pollutant decomposition.

About sludge returning

In Examples 1 to 3, sludge returning was carried out on the route of sludge returning (i) (Fig. 7) under the conditions of 5 $m^3$/day per sequencing batch reactor till 2005 (automatic operation).

From January, 2007 to May, 2008 after the beginning of the experiment, sludge returning (i) was carried out under the conditions of 5 to 15 $m^3$/day per sequencing batch reactor (automatic operation) and sludge returning (iii) was carried out under the conditions of 1 to 5 $m^3$/each inspection and twice a week (manual operation). When the amount of return sludge in the sludge returning (i) was 10 to 15 $m^3$ (maximum allowable amount in this facility), improvement in the treatment was observed. In the sludge returning (iii), the proper amount was 3 to 5 $m^3$ (maximum allowable amount in this facility). Sludge returning (ii) was intermittently carried out from about January to June, 2007, but variation of the sludge concentration in the thickened sludge retention tank 50 was large, and because of insufficient lift of the return pump, retuning of sludge was difficult. However, effectiveness of the sludge returning (ii) was confirmed.

Table 17: Amount of return sludge in sludge returning (i) to (iii)

| | | Sludge returning (i) ($m^3$/day) | Sludge returning (ii) ($m^3$/each inspection, twice/week) | Sludge returning (iii) ($m^3$/each inspection, twice/week) |
|---|---|---|---|---|
| Comp. Ex. 1 | the year 2005 | <5 | - | - |
| Ex. 1 | the year 2007 | 5 | 1-2 | 1 |
| Ex. 2 | the year 2008 | 5, 10-15 | - | increase from 1 to 2-5 (May) |
| Ex. 3 | the year 2009 | 10-15 | - | 3-5 |

Regarding the sludge returning (i), an effect was exerted when sludge returning of not less than 10 $m^3$/day to each sequencing batch reactor was carried out from July, 2008, and a higher effect was exerted when sludge returning of 15 $m^3$/day (maximum allowable amount in this facility) was carried out. Especially when a growth inhibitor flowed into the system, this sludge returning (i) came to stably contribute to recovery and maintenance of decomposing bacteria in the sequencing batch reactor 70.

When the sludge concentration in the thickened sludge retention tank 50 was high, the pump did not work because of insufficient lift, and therefore, the sludge returning (ii) was discontinued after the short run in 2007.

Regarding the sludge returning (iii), a stable effect was exerted under the conditions of 5 $m^3$/each inspection and twice a week, but because of restriction of tank volume of the facility, the sludge returning was carried out under the conditions of 3 to 5 $m^3$/each inspection and twice a week (maximum allowable amount).

About an amount of treatment accelerator

From 2007 to 2008, trials were continued, and as a result, the amounts of treatment accelerators added to each reactor from July, 2008 were determined.

An aluminum compound, a silicon compound and a magnesium compound were added as sludge flocculants (inorganic compounds); peptone and a dry yeast extract were added as nutrients (organic compounds); and a nitrogen source was added.

The amounts of the treatment accelerators and the nitrogen source added to each of the sequencing batch reactors 70, the amounts thereof added to the sludge retention tank 30 and the amounts thereof added to the thickened sludge retention tank 50 in Fig. 7 are set forth in Table 18, Table 19 and Table 20, respectively. The amounts of the aluminum compound, the silicon compound and the magnesium compound are each described in terms of a weight of an oxide. The amount of the nitrogen source is described in terms of $N_2$.

The treatment accelerators added were adsorbed by flocs immediately after the addition. The flocs are easily collected by centrifugal separation or filtration, and when the sludge having a MLSS concentration of 5,000 mg/L has a moisture content of 75%, the volume occupied is about 20 mL. That is to say, the treatment accelerators added are thickened to not less than 50 times in the flocs. When sewage (wastewater containing pollutants) is aerated, the pollutants are flocculated to form fine suspended matters. These suspended matters are called "flocs".

Table 18: Amount of treatment accelerator added to each sequencing batch reactor 70 (g) (*the following amount: twice/week)

| | Sludge flocculant | | | Nutrient | | Nitrogen source |
|---|---|---|---|---|---|---|
| | $SiO_2$ | $Al_2O_3$ | MgO | Peptone | Dry yeast extract | Urea |
| 2007 | 26-160 | 13-80 | 40-240 | 0-15 | 0-3 | 12-20 |
| Jan. to Jul., 2008 | 160-450 | 80-230 | 240-680 | 0 | 0 | 0 |
| Jul., 2008 to Dec., 2009 | 450 | 230 | 680 | 17.6 | 3.5 | 0 |
| *Notes: The amount of nitrogen source added was converted to an amount of $N_2$. | | | | | | |

For the growth of pollutant-decomposing microorganisms, addition of the nitrogen source into the sludge retention tank 30 was more effective than the addition thereof into the sequencing batch reactor 70. The concentrations of peptone and the dry yeast extract in the sequencing batch reactor were 0.055 mg/L and 0.011 mg/L, respectively, and they were low. However, their effects on the growth of pollutant-decomposing microorganisms were recognized. It is thought that since peptone and the dry yeast extract are adsorbed by the flocs in the tank water, the concentrations of them in the flocs in which the microorganisms are grown become 50 times or more, and an effect is exerted.

Table 19: Amount of treatment accelerator added to sludge retention tank 30 (g) (*twice/week)

| | Sludge flocculant | | | Nutrient | | Nitrogen source |
|---|---|---|---|---|---|---|
| | $SiO_2$ | $Al_2O_3$ | MgO | Peptone | Dry yeast extract | Urea |
| 2007 | 15-100 | 7-55 | 0-160 | 0-15 | 0-3 | 0-20 |
| Jan. to Jul., 2008 | 50-100 | 30-55 | 80-160 | 17.6 | 3.5 | 30-120 |
| Jul., 2008 to Dec., 2009 | 100 | 55 | 160 | 17.6 | 3.5 | 150 |
| *Notes: The amount of nitrogen source added was converted to an amount of $N_2$. | | | | | | |

The amounts of the treatment accelerators added to the sludge retention tank 30 were determined in July 2008, and the same amounts were continuously added. Although the residence time in the sludge retention tank 30 was 24 hours, a sludge reduction effect was exhibited.

Table 20: Amount of treatment accelerator added to thickened sludge retention tank 50 (g) (*twice/week)

| | Sludge flocculant | | | Nutrient | | Nitrogen source |
|---|---|---|---|---|---|---|
| | $SiO_2$ | $Al_2O_3$ | MgO | Peptone | Dry yeast extract | Urea |
| 2007 | 0-20 | 0-10 | 0-35 | 0 | 0 | 0-12 |
| Jan. to Jul., 2008 | 0 | 0 | 0 | 0 | 0 | 0 |
| Jul., 2008 to Dec., 2009 | 0 | 0 | 0 | 17.6 | 3.5 | 15-30 |
| *Notes: The amount of nitrogen source added was converted to an amount of $N_2$. | | | | | | |

Regarding the addition of treatment accelerators to the thickened sludge retention tank 50, addition of nutrients and a nitrogen source is effective. By virtue of the addition, decomposing strains (genus *Bacillus* bacteria, molds and yeasts) settled in the tank and contributed to decomposition of sludge, and maintenance of the number of decomposing strains.

By virtue of the amounts of the treatment accelerators added from July, 2008 onward, stable treatment became possible, and the decomposing bacteria were stably grown, so that reduction of sludge produced was continuously observed. Further, such addition was effective for the enhancement of sludge sedimentation property and the decomposition of pollutants. From about May, 2009, the pollutant-decomposing microorganisms were stably detected and the number thereof was stable, as shown in Table 21. From about July, 2009, decomposition of sludge and enhancement of treated water quality were particularly observed.

About change of microorganisms having high pollutant decomposition property (pollutant-highly decomposing bacterial floras)

The sewage treatment facility used in the examples was excellent in both of the removal of BOD components and the removal of T-N and T-P. It is thought that (a-1) genus *Bacillus* bacteria, (a-2) *Rhodococcus rubber,* (a-3) *Micrococcus luteus* and (b) molds and yeasts mainly contribute to the removal of BOD components; in addition to (a-1) genus *Bacillus* bacteria, (a-4) *Alcaligenes faecalis,* (a-5) genus *Paracoccus* bacteria and (a-6) genus *Rhodobacter* bacteria contribute to the removal of T-N components; and (a-7) genus *Sphingobacterium* bacteria and (a-8) *Rhizobium loti* contribute to the removal of T-P components.

(a) Bacteria

(a-1) Genus *Bacillus* bacteria

In Table 21, the numbers of genus *Bacillus* bacteria detected are set forth by years.

In December, 2006, the number of genus *Bacillus* bacteria in the sequencing batch reactor of the experimental facility was $5.5\times10^5$ cfu/mL on the average. To this tank, 3 strains of Strain A, Strain B and Strain C (concentration = about 1:1:3) were added as the seed bacterial flora 2 so that the total concentration in each sequencing batch reactor might become $2.5\times10^6$ cfu/mL.

On the other hand, to the sludge retention tank 30, the above 3 strains (concentration = about 1:1:3) were added so that the total concentration might become $2\times10^6$ cfu/mL, while the number of genus *Bacillus* bacteria before the addition was $7\times10^5$ cfu/mL.

After the addition of the seed bacteria, the total number of bacteria and the number of genus *Bacillus* bacteria were measured every week in 2007 and every two weeks from 2008 onward.

Strain A disappeared in April, 2007 (rapid decrease in the number of bacteria because of continuous inflow of growth inhibitory substances). Strain B disappeared in about July, 2007 (rapid decrease in the number of bacteria because of continuous inflow of growth inhibitory substances). After the addition, Strain C was detected until about May, 2007.

Thereafter, Strain D (*B. subtilis*) having the same base sequence and length (found by the analysis based on 16S rDNA) as those of Strain C and having higher decomposition property appeared from about May, 2007 and occupied about 90% of the genus *Bacillus* bacteria in about July, 2007 (Table 21).

Thereafter, Strain E (B. subtilis) and Strain F (*B. subtilis*) having the same base sequence and length (found in the 16S rDNA base sequence) as those of Strain C and having much higher decomposition property appeared from about October, 2007, and at this period, sludge decomposition conspicuously proceeded in the thickened sludge retention tank 50 (from October, 2007 to January, 2008, MLSS in the thickened sludge retention tank 50 decreased to 9,500 to 15,500 mg/L (immediately after thickening: 17,000 to 18,000 mg/L)) (Table 21).

Comparison of pollutant decomposition property resulted in Strain C < Strain D < Strain E < Strain F (Table 21).

In November, 2008, the number of Strain D + Strain E + Strain F occupied not less than 90% of the number of genus *Bacillus* bacteria, and the proportion of Strain D was 30 to 70%, the proportion of Strain E was 10 to 30%, and the proportion of Strain F was 20 to 20%. In July, 2009, Strain D occupied 10 to 30%, Strain E occupied 10 to 30%, and Strain F occupied 30 to 80%

(Table 21, Notes 3).

The method for discriminating and identifying strains is described in "Notes 3".

From the analysis of the 16S rDNA base sequences by the Clustal X and the gene tree, Strain D, Strain E and Strain F are presumed to be variants, which are derived from Strain C (seed bacteria),and produce enzymes with higher activity and show higher pollutant decomposition property.

The pollutant decomposition property of these genus *Bacillus* bacteria is thought to be based on starch decomposition property, fat and oil decomposition property and protein decomposition property, and when the strain or the strain group has starch decomposition property and fat and oil decomposition property, a difference in the pollutant decomposition property can be evaluated by cooked meat medium (muscle protein) decomposition property. The suspended solid [SS] removal ratios, said SS being contained in a cooked meat medium, of Strain A to Strain F and the dilute of activated sludge liquid of the sewage treatment facility are set forth in Table 22.

Notes 1: When sewage treatment is carried out by a standard method in a sewage treatment facility, genus *Bacillus* bacteria is existent at not more than $2\times10^5$ cfu/mL, usually at not more than $0.5\times10^5$ cfu/mL, and the cooked meat decomposition property of the activated sludge was low (Table 22).

Notes 2: Strain A exhibits starch decomposition property, fat and oil decomposition property and casein decomposition property, and Strain B exhibits fat and oil decomposition property and muscle protein (cooked meat medium) decomposition property.

Although the strains do not exhibit night soil decomposition property separately, Strain A + Strain B exhibits strong night soil decomposition property, and also exhibits greatly improved cooked meat medium decomposition property (Table 24). Strain C is a strain isolated from a night soil treatment facility of good treatment performance and exhibits starch decomposition property, fat and oil decomposition property and muscle protein decomposition property (Table 24).

Notes 3: In the sewage treatment facility used in the examples, the number of *B. thuringiensis* having appeared was as small as not more than $0.25\times10^5$ cfu/mL. In April, 2007, the number of *B. thuringiensis* became not more than $1\times10^4$ cfu/mL. *B. thuringiensis* can be easily identified by the colony morphology and the size of bacterial cell (diameter of not less than 1 $\mu$m).

Notes 4: Identification of Strain B and Strain C (both: *B. subtilis*) was carried out by the colony morphology, the cooked meat medium decomposition property and the 16S rDNA analysis. Strain B has older origin than a *B. subtilis* standard strain (ATCC 6051, AJ276351) and can be easily identified by the gene tree based on the 16S rDNA base sequences. When the alignment of Strain C was carried out by Clustal X, the 276th base in the 16S rDNA base sequence (number of bases: 1,510 bp, Fig. 8) was "R" ("A" or "G"; in Strain C, the 16S rDNA part was present at plural positions (copies) and about a half of their 276th bases are "A" and the residues are "G"), and the base corresponding to it in the *B. subtilus* standard strain was "A" (16S rDNA part was present at plural positions). The base sequence of Strain C is longer than the 16S rDNA base sequence of the *B subtilus* standard strain by 9 bases ("GAGTTTGAT") at the head (5'-end) of the sequence, and the base sequence of the *B. subtilis* standard strain is longer than that of Strain C by 16 bases at the end (3'-end). By these gene analyses, Strain C can be easily identified. Strain D, Strain E and Strain F were identified by the same base sequence and length as those of Strain C, the morphology of cultured colony and a difference in cooked meat medium decomposition property (Table 21). Strain C, Strain D, Strain E and Strain F proved to be extremely relative to one another.

Notes 5: Night soil is hard to decompose, and the residence time in the night soil treatment facility is usually 15 days. It is thought that progress of decomposition of night soil leads to reduction of bad smells and reduction of sludge. Therefore, night soil-decomposing bacterial strains were used as seed bacteria.

Table 21: MLSS concentration, total number of bacteria and number of genus *Bacillus* bacteria

| | | Average value of two sequencing batch reactors 70 (Fig. 7) (average value of sequencing batch reactors 2a and 3a in Fig. 2) | | | | Sludge retention tank 30 equipped with device (Fig. 7) (sludge retention tank 12a equipped with an aerator and a stirrer in Fig. 2) | | | |
|---|---|---|---|---|---|---|---|---|---|
| | | MLSS (mg/L) | Total number of bacteria | Number of genus *Bacillus* bacteria | Water temperature (°C) | MLSS (mg/L) | Total number of bacteria | Number of genus *Bacillus* bacteria | Water temperature (°C) |
| 2006 | Dec. | 1,823 | 3.69 | 5.50 | 18.2 | 3,138 | 4.50 | 7.00 | 18.1 |
| After addition of spawn flora | | - | 3.70 | 6.00 | - | - | 4.45 | 7.80 | - |
| 2007 | Feb. | 4,270 | 10.40 | 19.00 | 15.3 | 5,920 | 8.08 | 20.00 | 14.5 |
| | Apr. | 3,850 | 9.73 | 4.43 | 17.5 | 5,600 | 5.73 | 13.80 | 17.2 |
| | May | 3,170 | 11.84 | 9.75 | 20.4 | 4,250 | 4.68 | 9.50 | 20.3 |
| | Jul. | 2,950 | 7.95 | 4.25 | 25.3 | 4,200 | 5.60 | 9.00 | 25.5 |
| | Dec. | 3,700 | 12.65 | 13.00 | 18.4 | 5,000 | 10.50 | 14.30 | 18.2 |
| 2008 | Aug. | 2,850 | 21.90 | 8.13 | 27.4 | 6,000 | 20.40 | 16.80 | 27.9 |
| | Nov. | 2,890 | 8.59 | 16.00 | 22.1 | 6,200 | 12.90 | 33.80 | 22.2 |
| 2009 | Jul. | 2,480 | 5.17 | 5.50 | 25.5 | 5,920 | 7.80 | 13.30 | 26.0 |
| | Dec. | 2,500 | 8.81 | 6.13 | 17.6 | 5,840 | 12.90 | 13.50 | 17.2 |
| 2010 | Mar. | 3,263 | 11.9 | 4.25 | 14.6 | 5,550 | 16.8 | 9.00 | 14.7 |
| | Dec. | 3,888 | 9.55 | 5.29 | 18.8 | 6,260 | 11.7 | 8.25 | 19.6 |

*The total number of bacteria is a value obtained by "the numerical value described × $10^6$ cfu/mL", and the number of genus *Bacillus* bacteria is a value obtained by "the numerical value described × $10^5$ cfu/mL".

Table 21 (continued)

| | | Thickened sludge retention tank 50 equipped with device (Fig. 7) (thickened sludge retention tank 13a equipped with an aerator/a stirrer in Fig. 2) | | | |
|---|---|---|---|---|---|
| | | MLSS (mg/L) | Total number of bacteria | Number of genus *Bacillus* bacteria | Water temperature (°C) |
| 2006 | Dec. | 9,156 | 4.81 | 9.00 | 18.5 |
| After addition of spawn flora | | - | - | - | - |
| 2007 | Feb. | 18,500 | 10.80 | 59.00 | 16.0 |
| | Apr. | 14,300 | 9.42 | 40.10 | 17.8 |
| | May | 16,500 | 5.30 | 42.10 | 21.1 |
| | Jul. | 18,000 | 7.75 | 41.00 | 26.2 |
| | Dec. | 9,500 | 5.00 | 25.00 | 18.4 |
| 2008 | Aug. | 21,000 | 36.00 | 87.00 | 27.8 |
| | Nov. | 19,800 | 45.20 | 111.00 | 22.8 |
| 2009 | Jul. | 18,900 | 12.20 | 62.70 | 26.9 |
| | Dec. | 18,200 | 18.10 | 64.20 | 17.2 |
| 2010 | Mar. | - | - | - | - |
| | Dec. | - | - | - | - |

As shown in Table 21, seed bacterial flora 2 was added on December 4, 2006, but because heat was applied in cultivation of the seed bacteria, spores were difficult to germinate. In the sequencing batch reactor 70 and the sludge retention tank 30, most of spores germinated in the middle of February, and the number of genus *Bacillus* bacteria increased rapidly. The facility was run until the last third of February, 2007 without performing discharge of sludge.

In the thickened sludge retention tank 50, MLSS increased from May to August, 2007, and the MLSS having been thickened to about 17,500 mg/L underwent decomposition from October, 2007 to January, 2008, whereby the MLSS concentration was decreased to 9,500 to 15,500 mg/L over the period of about 30 days (reduction of about 10,000 mg/L). After Strain D, Strain E and Strain F having higher decomposition property appeared, prominent sludge reduction was observed.

By the use of a centrifugal thickening machine 60, the sludge in the sludge retention tank 30 was thickened to about 3 to 3.5 times from January, 2007 to January, 2008, and thereafter, it was thickened to about 4.2 to 4.8 times. From July, 2009 onward, the MLSS concentration in the thickened sludge retention tank 50 was about not more than 3.1 times the MLSS concentration in the sludge retention tank 30, and it was confirmed that decomposition of sludge had occurred also in the thickened sludge retention tank 50. When the concentration of genus *Bacillus* bacteria was compared, it was about 4.8 times, so that increase of genus *Bacillus* bacteria was confirmed. In general sewage treatment facilities, the number of genus *Bacillus* bacteria is not proportional to the MLSS concentration, and the number thereof in a sludge retention tank corresponding to the sludge retention tank 30 is about 1.1 to 1.2 times the number thereof in a sequencing batch reactor.

Notes 6: Separation of activated sludge bacteria

In 1,000 mL of distilled water, 8 g of Nutrient Broth (manufactured by Oxoid, code: CM0001), 7 g of glucose, 4 g of Peptone-P (manufactured by Oxoid, code: LP0049), 2 g of a dry yeast extract (manufactured by Bacto, code: 212750) and 15 g of agar were dissolved, and the solution was sterilized at 121°C for 15 minutes. Into sterilized petri dishes each having a diameter of 9 cm, 20 mL portions of the solution were poured to prepare flat culture media.

After drying, a 100-fold diluted liquid and a 10,000-fold diluted liquid of activated sludge were prepared, and 0.1 mL portions of each of them were added to the flat culture media and spread out with a bacteria spreader.

Culturing was carried out at 32°C for 4 to 5 days, and the colonies were observed.

Notes 7: Method for measuring removal ratio of SS in cooked meat medium

In two test tubes each having a diameter of 18 mm, 250 to 350 mg of an Oxoid cooked meat medium (CM0081) and 250 to 350 mg of a Difco cooked meat medium (226730) were weighed, respectively, and 6 mL of distilled water was added to each test tube, followed by sterilization at 121°C for 15 minutes. Strains were inoculated in each test tube, and shaking culture was carried out at 32°C for 10 days.

As blanks, test tubes in which no bacterial inoculation had been carried out were likewise subjected to shaking culture.

10 days after, suspended matters were collected by filtration using a glass fiber filter (Advantec GS25 or Whatman GF/A) having a diameter of 55 mm, and the suspended matters were dried at 125°C for 2.5 hours, followed by measuring the weight of the resulting dry suspended solid.

A SS removal ratio was calculated from the following formula (i) using a dry weight (X) of a suspended solid [SS] obtained after bacterial inoculation and culturing in the cooked meat medium and a dry weight (Y) of SS obtained after culturing without performing bacterial inoculation in the cooked meat medium;

$$\text{SS removal ratio (\%)} = \{(Y-X)/Y\}\times 100 \qquad \text{(i)}.$$

Table 22: SS (in cooked meat medium) removal ratio of strains and activated sludge of sewage treatment facility

| Name of strain (accession number of deposit) | | SS removal ratio (%) | |
|---|---|---|---|
| | | Oxoid product | Difco product |
| Genus *Bacillus* bacteria | *B. thuringiensis* (IAM 12077$^T$) | 11 | 11 |
| | *B. cereus* (JCM 12077$^T$) | 19 | 18 |
| | *B. subtilis* (IFO 13719$^T$) | 67 | 36 |
| | *B. subtilis*$^T$ + *B. thuringiensis*$^T$ | 60 | 38 |
| | *B. subtilis*$^T$ + *B. cereus*$^T$ | 27 | 16 |
| Genus *Bacillus* bacteria | Strain A (FERM BP-11280) | 24 | 40 |
| | Strain B (FERM BP-11281) | 77 | 53 |
| | Strain A + Strain B | 72 | 83 |
| | Strain A + *B. subtilis* (IFO 13719$^T$) | 79 | 76 |
| | Strain C (FERM BP-11282) | 76 | 62 |
| | Strain D (FERM BP-11283) | 81 | 60 |
| | Strain E (FERM BP-11284) | 73 | 74 |
| | Strain F (FERM BP-11285) | 81 | 76 |
| | Strain D + Strain E + Strain F | 78 | 65 |
| Molds | Strain G (FERM BP-11289) | 4 | 5 |

(continued)

| Name of strain (accession number of deposit) | | SS removal ratio (%) | |
|---|---|---|---|
| | | Oxoid product | Difco product |
| Yeasts | Strain H (FERM BP-11287) | 9 | 1 |
| | Strain I (FERM BP-11286) | 0.5 | <0.5 |
| | Strain J (FERM BP-11288) | 1 | <0.5 |
| Genus *Bacillus* bacteria + mold | Strain D + Strain G | 85 | 62 |
| | Strain E + Strain G | 81 | 51 |
| | Strain F + Strain G | 79 | 74 |
| Genus *Bacillus* bacteria + yeasts | Strain D + Strain H | 78 | 47 |
| | Strain E + Strain H | 80 | 21 |
| | Strain F + Strain H | 81 | 37 |
| | Strain D + Strain I | 82 | 67 |
| | Strain E + Strain I | 77 | 62 |
| | Strain F + Strain I | 76 | 68 |
| | Strain D + Strain J | 83 | 64 |
| | Strain E + Strain J | 75 | 64 |
| | Strain F + Strain J | 82 | 75 |
| 100-fold diluted liquid of activated sludge of treatment facility before experiment, 0.2 mL | | 41 | 28 |
| 100-fold diluted liquid of activated sludge of treatment facility in Dec., 2009, 0.2 mL | | 80 | 82 |
| *Notes: In the case of a mixture of Strain D + Strain E + Strain F, SS removal ratios regarding Oxoid product and Difco product are lower than the values of Strain E and Strain F, and the reason is presumed to be that growth of Strain D is active and its concentration becomes higher than that of Strain E and Strain F.<br>*Notes: The superscript "T" on the name of strain means that the strain is standard strain (representative strain of the species). | | | |

Strain A (*B. thuringiensis*) and Strain B (*B. subtilis*) cannot decompose night soil separately, but when they coexist, they exhibit vigorous decomposition property (see Table 24 and non patent literature 1). Strains exhibiting a SS removal ratio of not less than 70% in the case of Oxoid medium and a SS removal ratio of not less than 60% in the case of Difco medium and having starch decomposition property and fat and oil decomposition property were judged to be pollutant-highly decomposing strains. Strain A + Strain B, Strain A + *B. subtilis*$^{T}$, and Strain C satisfy these conditions, and Strain D, Strain E and Strain F can be judged to be pollutant-highly decomposing strains.

Regarding the ability to remove suspended solid [SS] in the Oxoid medium and the Difco medium, the sewage treatment facility activated sludge (100-fold diluted liquid) before the beginning of the experiment was compared with that (100-fold diluted liquid) after the beginning of the experiment (October, 2009), and as a result, the SS removal ability was greatly enhanced after the beginning of the experiment (Table 22).

In the cases of Strain D + Strain H, Strain E + Strain H, and Strain F + Strain H, the SS removal ratio was lowered, but it is thought that such a phenomenon did not occur in the activated sludge. The reason is thought to be that in the Difco medium, growth of Strain H becomes active, but growth of Strain D, Strain E and Strain F is inhibited and the numbers of these strains are decreased (from microscopic observation). Presumably, it is not the reason that protease activity of Strain D, Strain E and Strain F is inhibited.

In 2010, reduction of sludge much further proceeded. That is to say, Strain A + Strain B disappeared, and Strain C underwent variation to strains having higher pollutant decomposition property, such as Strain D, Strain E, Strain F, IRN-110 strain and IRN-111 strain. It is thought that the effects of Strain A + Strain B are to decompose pollutants and to support growth and acclimation of Strain C while Strain C is acclimated to sewage and pollutants, and undergoes variation to Strain D (Strain E, Strain F, IRN-110 strain, IRN-111 strain, etc.). It is thought that by virtue of addition of Strain A + Strain B, cessation of growth of Strain C was prevented, and there was no need to add Strain C repeatedly.

The following genus *Bacillus* bacteria have the same 16S rDNA as that of Strain C, and the SS removal ratios regarding the cooked meat media (Oxoid) and (Difco) are set forth in the following table.

Table 23: SS removal ratio of genus *Bacillus* bacteria isolated in 2009 and 2010

| Date of isolation | | Identification name | SS removal ratio (%) | |
|---|---|---|---|---|
| | | | Oxoid product | Difco product |
| 2009 | Nov. 8 | IRN 4-1 | 65 | 38 |
| | | IRN 6-1 | 87 | 55 |
| | Apr. 7 | IRN-45 | 73 | 43 |
| 2010 | Jun. 23 | IRN-110 | 73 | 70 |
| | | IRN-111 | 75 | 60 |
| | | IRN-112 | 64 | 64 |

As can be seen from Table 23, the genus *Bacillus* bacteria having been isolated by 2009 exhibited a high SS removal ratio in the case of the Oxoid medium but sometimes exhibited a low SS removal ratio in the case of the Difco medium. However, the SS removal ratio in the case of the Difco medium increased in 2010, and a ratio of Oxoid SS removal ratio/Difco SS removal ratio was lowered. In 2010, sludge reduction was further accelerated.

There are described below the grounds for defining, as a microorganism group having high pollutant decomposition property, strains qualitatively exhibiting starch decomposition property and fat and oil decomposition property and having a SS removal ratio of not less than 70% in the case of an Oxoid cooked meat medium that is fibrous protein and a SS removal ratio of not less than 60% in the case of a Difco cooked meat medium that is fibrous protein.

Table 24: Starch decomposition property, fat and oil decomposition property, SS removal ratio and night soil decomposition property of Stains A to C

| | Starch Decomposition property | Fat and oil Decomposition property | SS removal ratio (%) | | Night soil Decomposition property |
|---|---|---|---|---|---|
| | | | Oxoid product | Difco product | |
| Strain A (FERM BP-11280) | AA | AA | 24 | 40 | - |
| Strain B (FERM BP-11281) | - | AA | 77 | 53 | - |
| Strain A + Strain B | AA | AA | 72 | 83 | AA |
| Strain C (FERM BP-11282) | AA | AA | 76 | 62 | AA |

In a common opinion, activated sludge bacteria are regarded as main constituents of sewage sludge, but actually, undecomposed pollutants contained in sewage are thought to be main constituents of sewage sludge. It is thought that since most of sewage pollutants are derived from organisms, they are constituted of starch, fat and oil, and protein, and night soil occupies not less than a half of the undecomposed pollutants. Therefore, night soil-decomposing strains were noted. Regarding Strain A, Strain B, Strain A + Strain B, and Strain C having been isolated from the night soil treatment facility, starch decomposition property, fat and oil decomposition property, and SS removal ratios in the case of cooked meat media were measured. As a result, it was confirmed that Strain A + Strain B, and Strain C having night soil-decomposition property exhibited starch decomposition property and fat and oil decomposition property, and had a SS removal ratio of not less than 70% in the case of Oxoid medium and a SS removal ratio of not less than 60% in the case of Difco medium (Tables 22 and 24). Bacterial strains or bacterial floras having these biochemical properties were defined as those of high pollutant decomposition property. Strain A and Strain B did not exhibit night soil decomposition property separately. The high pollutant decomposition property is composed of a single strain or a single bacterial flora in which bacteria, yeasts and molds each may be composed of a single kind or two or more kinds.

(a-2) *Rhodococcus rubber*

*Rhodococcus rubber* is known to have various synthetic compound-utilizing properties, such as polyhydroxyalkanoic acid decomposition property, vegetable oil decomposition property, decomposition property to various cyclic hydrocarbons (e.g., cyclododecane), higher hydrocarbon ether compound decomposition property, methyl-t-butyl ether decomposition property, and secondary alkylsulfuric acid decomposition property. *Rhodococcus rubber* is thought to contribute to removal of detergent, fat and oil, and other polymeric compounds. In July, 2009, *Rhodococcus rubber* bacteria of $4\times10^5$ to $8\times10^5$ cfu/mL were observed in the sequencing batch reactor 70, those of $7\times10^5$ to $14\times10^5$ cfu/mL were observed in the sludge retention tank 30, and they were detected throughout the year. *Rhodococcus rubber* can be easily identified by the specific morphology of the colony (the colony exhibits four kinds of morphologies). *Rhodococcus rubber* was confirmed by 16S rDNA.

(a-3) *Micrococcus luteus*

*Micrococcus luteus* exhibits higher fatty acid-utilizing property, esterase production property, C16 hydrocarbon-utilizing property, etc., and is thought to contribute to removal of polymeric compounds such as detergent. *Micrococcus luteus* can be easily identified by the colony morphology and the microscopic observation of the bacterial cell. In July, 2009, *Micrococcus luteus bacteria* of not more than $1\times10^5$ cfu/mL were detected in the sequencing batch reactor 70, and those of $1\times10^5$ to $4\times10^5$ cfu/mL were detected in the sludge retention tank 30.

(a-4) *Alcaligenes faecalis*

*Alcaligenes faecalis* exhibits nitrate ion-utilizing property and nitrogen removing property. With removal of nitrogen, BOD components are consumed. *Alcaligenes faecalis* forms a light-colored transparent colony of specific morphology and can be easily identified. In July, 2009, *Alcaligenes faecalis* occupied about 25% of the total number of bacteria in the sequencing batch reactor 70, and occupied about 50% of the total number of bacteria in the sludge retention tank 30.

Notes 8: It has been commonly considered until ten years ago (or also at present) that removal of nitrogen does not occur under the aerobic conditions. However, studies of *Alcaligenes faecalis* and *Paracoccus denitrificans* have proceeded, and at present, removal of nitrogen under the aerobic conditions has been recognized.

(a-5) Genus *Paracoccus* bacteria

Species of these three strains have been unidentified. Any of them exhibits nitrogen removing property, and when removal of nitrogen is performed, BOD components are utilized. Genus *Paracoccus* bacteria form light or dark pink transparent colonies and can be easily identified. In July, 2009, genus *Paracoccus* bacteria of $2\times10^5$ to $6\times10^5$ cfu/mL appeared in the sequencing batch reactor 70, and those of $4\times10^5$ to $12\times10^5$ cfu/mL appeared in the sludge retention tank 30.

(a-6) Genus *Rhodobacter* bacteria

Genus *Rhodobacter* bacteria exhibit nitrate ion reduction property and nitrogen removing property, and they metabolize phosphoric acid. Genus *Rhodobacter* bacteria form specific colonies and can be easily identified. In July, 2009, genus *Rhodobacter* bacteria of $2\times10^5$ to $6\times10^5$ cfu/mL were detected in the sequencing batch reactor 70, and those of $2\times10^5$ to $8\times10^5$ cfu/mL were detected in the sludge retention tank 30.

(a-7) Genus *Sphingobacter* bacteria

Genus *Sphingobacter* bacteria exhibit nitrogen removing property and phospholipid (Sphingolipid) accumulation property. Genus *Sphingobacter* bacteria form yellow colonies and can be easily identified. They are thought to contribute removal of phosphoric acid. In July, 2009, Genus *Sphingobacter* bacteria of $<1\times10^5$ cfu/mL appeared in the sequencing batch reactor 70, and those of $1\times10^5$ to $4\times10^5$ cfu/mL appeared in the sludge retention tank 30. It is sometimes difficult to distinguish them from (a-8) *Rhizobium loti.*

(a-8) *Rhizobium loti*

It is thought that *Rhizobium loti* relates to metabolism of phosphoric acid and contributes to removal of phosphoric acid. *Rhizobium loti* bacteria of <$1\times10^5$ cfu/mL were observed in the sequencing batch reactor 70, and those of $1\times10^5$ to $4\times10^5$ cfu/mL were observed in the sludge retention tank 30. It is sometimes difficult to distinguish them from (a-7) *Sphingobacterium sp.*

(b) Molds and yeasts

(b-1) Mold (Strain G)

From about May, 2009, Strain G (*Penicillium turbatum*) came to be detected in the sludge retention tank 30 during the measurement of the number of bacteria, and in September, 2009, Strain G of $5\times10^5$ cfu/mL were detected in the sludge retention tank 30, and those of $2.5\times10^4$ cfu/mL were detected in the sequencing batch reactor 70. A series of the strains having been isolated were identified as *Penicillium turbatum* by the similarity of 28S rDNA base sequences and the gene tree. *Penicillium turbatum* exhibits strong starch decomposition property, fat and oil composition property and cellulose decomposition property. *Penicillium turbatum* is known to produce antibiotics. In the sewage treatment facility, growth of influent filamentous bacteria was weakened in the sequencing batch reactor from about January, 2009, and from May, 2009 onward, they could not grow (a large number of filamentous bacteria undergoing decomposition were observed).

(b-2) Yeasts

From about August, 2008, existence of yeasts was confirmed by microscopic observation of sludge in the sludge retention tank 30. Isolation from the sludge retention tank 30 was attempted in March, 2009 and June 2009. That is, Strain I (*Pichia fermentans*) and Strain J (*Pichia guilliermondii*) were added in March to perform isolation, and Strain H (*Galactomyces geotrichum*/*Geotrichum silvicola,* relationship between sexuality and asexuality) was added in June 2009, to perform isolation.

Each of Strain H, Strain I and Strain J exhibited strong starch decomposition property, fat and oil decomposition property and cellulose decomposition property. In June, 2009, the total number of strains of Strain H, Strain I and Strain J was $1\times10^3$ cfu/mL in the sludge retention tank 30, and Strain H occupied about 20%, Strain I occupied about 20%, and Strain J occupied about 60%. They were identified by the similarity of 26S rDNA base sequences and the gene tree.

Notes 9: Isolation of yeasts

In 1,000 mL of distilled water, 5 g of potato starch, 5 g of soluble starch, 5 g of glucose, 5 g of Nutrient Broth (manufactured by Oxoid, code: CM0001), 4 g of Peptone-P (manufactured by Oxoid, code: LP0049), 2 g of a dry yeast extract (manufactured by Bacto, code: 212750) and 16 g of agar were suspended. The suspension was adjusted to pH 3.8 by the use of citric acid and then sterilized at 115°C for 3 minutes to prepare a flat medium as an isolation medium for yeasts.

Onto the medium, 0.1 mL of tank water of the sludge retention tank 30 was spread out, then from a colony grown by culturing for 6 days, fishing was performed, followed by culturing. The strains obtained by fishing were subjected to purification 3 times by a dilution method to obtain pure strains. The medium used for culturing strains obtained by fishing was a Nutrient Broth-glucose medium described in Notes 6.

Notes 10: Preparation process for seed bacteria used in the examples and addition of them

In 1,000 mL of distilled water, 15 g of Nutrient Broth (manufactured by Oxoid, code: CM-1), 10 g of glucose, 2 g of a dry yeast extract and 15 g of agar were dissolved, and the solution was sterilized at 121°C for 15 minutes and introduced (about 1 liter of solution is necessary) into a stainless steel vat (with lid, about 23 cm $\times$ 32 cm) having been previously sterilized, whereby 5 flat culture media were prepared.

Strain A, Strain B and Strain C were cultured in advance in test tubes (each strain: 6 mL $\times$ 3 test tubes), then Strain A was scattered in the first vat, Strain B was scattered in the second vat, and Strain C was scattered in the third to the fifth vats, followed by culturing at 30°C for 10 days. Each of the resulting cultures was scraped out and suspended in 2 liters of distilled water.

The suspension was diluted in a dilution of $1\times10^4$ times, a dilution of $1\times10^6$ times and a dilution of $1\times10^8$ times, and OD was measured at 600 nm. From the literature, OD proved to be 0.3, and it was taken as about $1\times10^9$ cells/mL. The liquid concentrate was diluted to $2\times10^{12}$ cells/mL, and 500 mL portions of the dilute liquid were added to each sequencing batch reactor (concentration of seed bacteria: about $2.5 \times 10^6$ cfu/mL).

On the other hand, 1 liter of a liquid having a seed bacteria concentration of $8 \times 10^{10}$ cells/mL was prepared and added to the sludge retention tank 30 (spawn concentration: about $2 \times 10^6$ cells/mL). The seed bacteria thus prepared generated heat of about 40°C during culturing. The culture having sporulated did not rapidly return to nutrient cells though it was cultured at 32°C in a nutrient medium. About 25 days after the addition of seed bacteria, spores of them begun to germinate. Before the addition of seed bacteria, the numbers of genus *Bacillus* bacteria in the sequencing batch reactors were $5 \times 10^5$ cfu/mL and $6 \times 10^5$ cfu/mL, and the number thereof in the sludge retention tank 30 was $7 \times 10^5$ cfu/mL. The SS removal ratio in the case of Oxoid cooked meat medium was 41%, and the SS removal ratio in the case of Difco cooked meat medium was 28%. After the addition of the seed bacteria, the SS removal ratio in the case of Oxoid cooked meat medium was 80%, and the SS removal ratio in the case of Difco cooked meat medium was 82% (Table 22). Thus, the pollutant decomposition property was greatly enhanced (Tables 2, 5, 7, 10, 12 and 15). (see Quiagen Genomic DNA Handbook (2001), pp. 38-39)

Notes 11: A starch decomposition property test and a fat and oil decomposition property test were carried out in accordance with Toshikazu Sakazaki, Etsuro Yoshizaki, Kanji Miki, "Shin Saikin Baichigaku Koza Ge-1 (New Studies on Bacterial Medium Lecture Volume Two-1)", Kindai Shuppan Co., Ltd. These decomposition property tests are briefly described below together with a cellulose decomposition test.

Starch decomposition property test

Test strains were inoculated in an agar flat medium containing soluble starch and cultured at 32°C. In a colony formed after 2 to 7 days, several droplets of an iodine-potassium iodide solution (Gram staining Lugoul’s solution) were dropped. A case where iodine-starch reaction had disappeared on the periphery of the colony was judged to "have starch decomposition property" (indicated by "AA" in Table 24).

The agar flat medium containing soluble starch was prepared by dissolving 8 g of Nutrient Broth (manufactured by Oxoid, code: CM-1), 4 g of Peptone-P (manufactured by Oxoid, code: LP0049), 2 g of glucose, 5 g of soluble starch, 2 g of a dry yeast extract (manufactured by Bacto, code: 212750) and 15 g of agar in 1,000 mL of distilled water, sterilizing the solution at 121°C for 15 minutes, pouring 20 mL portions of the solution into sterilized petri dishes and cooling them.

The Gram staining Lugoul’s solution was prepared by dissolving 0.2 g of iodine and 0.4 g of potassium iodide in 60 mL of distilled water, and the resulting solution was stored in a brown bottle.

Fat and oil decomposition property test Test strains were inoculated in an agar flat medium for a fat and oil decomposition property test and cultured at 32°C for 2 to 10 days. A case where crystals (organic acid calcium salt) had been formed on the periphery of the colony was judged to "have fat and oil decomposition property" (indicated by "AA" in Table 24).

The agar flat medium for a fat and oil decomposition property test was prepared by preparing the following liquids a to c, sterilizing them, then rapidly mixing the liquids a to c at 85°C, pouring 20 mL portions of the mixture into petri dishes having been sterilized in advance at 121°C for 15 minutes and cooling them.

Liquid a: In 1,000 mL of distilled water, 8 g of Nutrient Broth (manufactured by Oxoid, code: CM-1), 7 g of glucose, 4 g of Peptone-P (manufactured by Oxoid, code: LP0049), 2 g of a dry yeast extract (manufactured by Bacto, code: 212750) and 15 g of agar were dissolved, and the solution was sterilized at 121°C for 15 minutes.

Liquid b: 10 mL of a 1% calcium chloride solution was prepared, and the solution was sterilized at 121°C for 15 minutes.

Liquid c: 10 mL of Tween 80 (or 60 or 40) was sterilized at 121°C for 15 minutes.

Cellulose decomposition property test

Test strains were inoculated in an agar medium containing a cellulose powder and cultured at 32°C for 2 to 10 days. A case where a transparent band had been formed on the periphery of the colony was judged to "have cellulose decomposition property" (indicated by "AA" in Table 24).

The agar flat medium containing a cellulose powder was prepared by dissolving 8 g of Nutrient Broth (manufactured by Oxoid, code: CM-1), 7 g of glucose, 4 g of Peptone-P (manufactured by Oxoid, code: LP0049), 2 g of a dry yeast extract (manufactured by Bacto, code: 212750), 1 g of a cellulose powder and 16 g of agar in 1,000 mL of distilled water, sterilizing the solution at 121°C for 15 minutes, then pouring 20 mL portions of the solution into sterilized petri dishes and cooling them.

Industrial Applicability

The efficiency-increasing method described herein is applicable not only to sewage treatment but also to livestock wastewater treatment, night soil treatment and other food industrial wastewater treatments, and is applicable to increase in efficiency of treatments in various fields.

Reference Signs List

1a: raw water
2a: first treatment tank or first sequencing batch reactor
3a: second treatment tank or second sequencing batch reactor
4a: third treatment tank
5a: OD tank
6a: sedimentation tank
7a: effluent (in Figs. 1 to 3)
8a: first excess sludge tank or sludge retention tank
9a: second excess sludge tank or thickened sludge retention tank
10a: sludge thickening tank (in Figs. 1 to 3)
11a: sludge retention tank or thickened sludge retention tank (in Figs. 1 to 3)
12a: sludge retention tank equipped with aerator and stirrer
13a: thickened sludge retention tank equipped with aerator and stirrer
14a: discharge sludge (in Figs. 1 to 3)
15a: excess sludge or withdrawn sludge
Xa: sludge withdrawing step
Ya: sludge returning step
Za: sludge thickening step (performed by sludge thickening tank, sludge thickening machine or the like)
Va: first sludge returning step
Wa: second sludge returning step
1: sewage or wastewater
2: seed bacterial flora
3: stirrer
10: aeration tank
11: stirred liquid
12, 13, 14: treatment tank
20: sludge sedimentation tank
21: supernatant liquid
22: precipitated sludge (excess sludge)
23: effluent (in Figs. 5 to 7)
30: sludge retention tank (in Figs. 5 to 7)
31: stirred and retained sludge
40: sludge thickening tank (in Figs. 5 to 7)
41: thickened sludge
50: thickened sludge retention tank
51: stirred, thickened and retained sludge
52: discharge sludge (in Figs. 5 to 7)
60: centrifugal thickening machine
61: thickened sludge
70: sequencing batch reactor

<110> IRIE, Ryozo

<120> Wastewater Treatment Method, Wastewater Treatment System, and Pollutant Decomposition Activity Measurement Method of Activated Sludge Microorganism

<130> 27.20.114398

<150> JP 2010-101166
<151> 2010-04-26

<150> JP 2010-278088

<151> 2010-12-14

<160> 1

<170> PatentIn version 3.1

<210> 1
<211> 1510
<212> DNA
<213> Bacillus subtilis

<400> 1

```
gagtttgatc ctggctcagg acgaacgctg gcggcgtgcc taatacatgc aagtcgagcg     60
gacagatggg agcttgctcc ctgatgttag cggcggacgg gtgagtaaca cgtgggtaac    120
ctgcctgtaa gactgggata actccgggaa accggggcta ataccggatg gttgtttgaa    180
ccgcatggtt caaacataaa aggtggcttc ggctaccact tacagatgga cccgcggcgc    240
attagctagt tggtgaggta acggctcacc aaggcracga tgcgtagccg acctgagagg    300
gtgatcggcc acactgggac tgagacacgg cccagactcc tacgggaggc agcagtaggg    360
aatcttccgc aatggacgaa agtctgacgg agcaacgccg cgtgagtgat gaaggttttc    420
ggatcgtaaa gctctgttgt tagggaagaa caagtaccgt tcgaataggg cggtaccttg    480
acggtaccta accagaaagc cacggctaac tacgtgccag cagccgcggt aatacgtagg    540
tggcaagcgt tgtccggaat tattgggcgt aaagggctcg caggcggttt cttaagtctg    600
atgtgaaagc ccccggctca accggggagg gtcattggaa actggggaac ttgagtgcag    660
aagaggagag tggaattcca cgtgtagcgg tgaaatgcgt agagatgtgg aggaacacca    720
gtggcgaagg cgactctctg gtctgtaact gacgctgagg agcgaaagcg tggggagcga    780
acaggattag ataccctggt agtccacgcc gtaaacgatg agtgctaagt gttagggggt    840
ttccgcccct tagtgctgca gctaacgcat taagcactcc gcctggggag tacggtcgca    900
agactgaaac tcaaaggaat tgacgggggc ccgcacaagc ggtggagcat gtggtttaat    960
tcgaagcaac gcgaagaacc ttaccaggtc ttgacatcct ctgacaatcc tagagatagg   1020
acgtcccctt cgggggcaga gtgacaggtg gtgcatggtt gtcgtcagct cgtgtcgtga   1080
gatgttgggt taagtcccgc aacgagcgca acccttgatc ttagttgcca gcattcagtt   1140
gggcactcta aggtgactgc cggtgacaaa ccggaggaag gtggggatga cgtcaaatca   1200
```

```
tcatgcccct tatgacctgg gctacacacg tgctacaatg gacagaacaa agggcagcga   1260
aaccgcgagg ttaagccaat cccacaaatc tgttctcagt tcggatcgca gtctgcaact   1320
cgactgcgtg aagctggaat cgctagtaat cgcggatcag catgccgcgg tgaatacgtt   1380
cccgggcctt gtacacaccg cccgtcacac cacgagagtt tgtaacaccc gaagtcggtg   1440
aggtaacctt ttaggagcca gccgccgaag gtgggacaga tgattggggt gaagtcgtaa   1500
caaggtagcc                                                          1510
```

## Claims

1. A wastewater treatment method for an activated sludge treatment of raw water 1a by a sequencing batch reactor treatment method, the said sequencing batch reactor treatment method being a method in which:

   raw water 1a is introduced into a first sequencing batch reactor 2a and a second sequencing batch reactor 3a, each of which is equipped with an aeration device, a stirring device and a drainage device, and is subjected to activated sludge treatment therein;
   the sludge precipitated on the bottom of both the sequencing batch reactors is withdrawn (Xa) and transferred into a first excess sludge tank 8a, and then is thickened and stored in a second excess sludge tank 9a, and discharged; and
   the supernatant liquid in the sequencing batch reactors is discharged into a river,
   the said wastewater treatment method comprising:

   (i) using a sludge retention tank 12a equipped with an aerator and a stirrer and a thickened sludge retention tank 13a equipped with an aerator and a stirrer as the first excess sludge tank 8a and the second excess sludge tank 9a, respectively;
   (ii) performing a first sludge returning step Va that is a step of returning sludge to the first sequencing batch reactor 2a and the second sequencing batch reactor 3a from the sludge retention tank 12a and the thickened sludge retention tank 13a in both of which the sludge was previously aerated and stirred; and
   (iii) performing a second sludge returning step Wa that is a step of returning sludge, which was previously aerated and stirred in the thickened sludge retention tank 13a, to the sludge retention tank 12a;

   wherein the sludge in the thickened sludge retention tank 13a is supplied from the sludge retention tank 12a through a sludge thickening step Za,
   thereby maintaining the number of genus *Bacillus* bacteria in the sequencing batch reactors 2a and 3a.

2. The wastewater treatment method as claimed in claim 1, further comprising adding a treatment accelerator to one or more tanks selected from:

   the first sequencing batch reactor 2a,
   the second sequencing batch reactor 3a,
   the sludge retention tank 12a, and
   the thickened sludge retention tank 13a.

3. The wastewater treatment method as claimed in claim 2, wherein the treatment accelerator is one or more substances selected from the group consisting of a silicon compound, a magnesium compound, an aluminum compound, peptone and a dry yeast extract.

4. The wastewater treatment method as claimed in claim 1 or 2, comprising adding a nitrogen source to one or more tanks selected from:

   the sludge retention tank 12a, and
   the thickened sludge retention tank 13a.

5. The wastewater treatment method as claimed in claim 4,
wherein the nitrogen source is one or more substances selected from urea, ammonium sulfate, ammonium chloride and ammonium nitrate.

6. The wastewater treatment method as claimed in any one of claims 1 to 5, wherein the amount of return sludge in the first sludge returning step Va is 10 to 30% of the amount of influent raw water.

7. The wastewater treatment method as claimed in any one of claims 1 to 6, wherein the amount of return sludge in the second sludge returning step Wa is 15 to 60%/week of the amount of sludge in the sludge retention tank 12a.

**Patentansprüche**

1. Abwasserbehandlungsverfahren für eine Belebtschlamm-Behandlung von Rohwasser 1a über ein Sequencing Batch Reactor-Behandlungsverfahren, wobei es sich bei dem Sequencing Batch Reactor-Behandlungsverfahren um ein Verfahren handelt, bei dem:

   Rohwasser 1a in einen ersten Sequencing Batch-Reaktor 2a und einen zweiten Sequencing Batch-Reaktor 3a, von denen jeder mit einer Belüftungsvorrichtung, einer Rührvorrichtung und einer Drainagevorrichtung ausgerüstet ist, eingeleitet und darin einer Belebtschlamm-Behandlung unterzogen wird;
   der Schlamm, der sich am Boden der beiden Sequencing Batch-Reaktoren abgeschieden hat, abgezogen (Xa) und in einen ersten Überschussschlammbehälter 8a überführt, und dann eingedickt und in einem zweiten Überschussschlammbehälter 9a gelagert und entsorgt wird; und
   die überstehende Flüssigkeit in den Sequencing Batch-Reaktoren in einen Fluss entsorgt wird,
   wobei das Abwasserbehandlungsverfahren umfasst:

      (i) Verwenden eines mit einem Belüfter und einem Rührer ausgerüsteten Schlammverweilbehälters 12a und eines mit einem Belüfter und einem Rührer ausgerüsteten Dickschlammverweilbehälters 13a als den ersten Überschussschlammbehälter 8a bzw. den zweiten Überschussschlammbehälter 9a;
      (ii) Durchführen eines ersten Schlammrückführschritts Va, bei dem es sich um einen Schritt des Zurückführens von Schlamm aus dem Schlammverweilbehälter 12a und dem Dickschlammverweilbehälter 13a, in beiden von denen der Schlamm zuvor belüftet und gerührt wurde, zum ersten Sequencing Batch-Reaktor 2a und dem zweiten Sequencing Batch-Reaktor 3a handelt; und
      (iii) Durchführen eines zweiten Schlammrückführschritts Wa, bei dem es sich um einen Schritt des Zurückführens von Schlamm, der zuvor im Dickschlammverweilbehälter 13a belüftet und gerührt wurde, zum Schlammverweilbehälter 12a handelt;

   wobei der Schlamm im Dickschlammverweilbehälter 13a aus dem Schlammverweilbehälter 12a über einen Schlammeindickungsschritt Za bereitgestellt wird,
   wodurch die Anzahl von Bakterien der Gattung *Bacillus* in den Sequencing Batch-Reaktoren 2a und 3a aufrechterhalten wird.

2. Abwasserbehandlungsverfahren nach Anspruch 1, das weiter das Zugeben eines Behandlungsbeschleunigers zu einem oder mehreren Behältern umfasst, ausgewählt aus:

   dem ersten Sequencing Batch-Reaktor 2a,
   dem zweiten Sequencing Batch-Reaktor 3a,
   dem Schlammverweilbehälter 12a, und
   dem Dickschlammverweilbehälter 13a.

3. Abwasserbehandlungsverfahren nach Anspruch 2, wobei es sich beim Behandlungsbeschleuniger um eine oder mehrere Substanzen handelt, ausgewählt aus der Gruppe bestehend aus einer Siliciumverbindung, einer Magnesiumverbindung, einer Aluminiumverbindung, Pepton und einem Trockenhefeextrakt.

4. Abwasserbehandlungsverfahren nach Anspruch 1 oder 2, das das Zugeben einer Stickstoffquelle zu einem oder mehreren Behältern umfasst, ausgewählt aus:

   dem Schlammverweilbehälter 12a, und

dem Dickschlammverweilbehälter 13a.

5. Abwasserbehandlungsverfahren nach Anspruch 4, wobei es sich bei der Stickstoffquelle um eine oder mehrere Substanzen handelt, ausgewählt aus Harnstoff, Ammoniumsulfat, Ammoniumchlorid und Ammoniumnitrat.

6. Abwasserbehandlungsverfahren nach einem der Ansprüche 1 bis 5, wobei die Menge an Rückführschlamm im ersten Schlammrückführschritt Va 10 bis 30 % der Menge an zulaufendem Rohwasser beträgt.

7. Abwasserbehandlungsverfahren nach einem der Ansprüche 1 bis 6, wobei die Menge an Rückführschlamm im zweiten Schlammrückführschritt Wa 15 bis 60 %/Woche der Schlammmenge im Schlammverweilbehälter 12a beträgt.

## Revendications

1. Procédé de traitement des eaux usées pour un traitement par boues activées d'une eau brute 1a par un procédé de traitement en réacteur séquentiel discontinu, ledit procédé de traitement en réacteur séquentiel discontinu étant un procédé dans lequel :

   de l'eau brute 1a est introduite dans un premier réacteur séquentiel discontinu 2a et un second réacteur séquentiel discontinu 3a, chacun d'eux est équipé d'un dispositif d'aération, d'un dispositif d'agitation et d'un dispositif de purge, et est soumise à un traitement par boues activées dans ceux-ci ;
   les boues précipitées au fond des deux réacteurs séquentiels discontinus sont extraites (Xa) et transférées dans un premier réservoir de boues en excès 8a, puis sont épaissies et stockées dans un second réservoir de boues en excès 9a, et évacuées ; et
   le liquide surnageant dans les réacteurs séquentiels discontinus est évacué dans une rivière,
   le dit procédé de traitement des eaux usées comprenant :

   (i) l'utilisation d'un réservoir de rétention de boues 12a équipé d'un aérateur et d'un agitateur et d'un réservoir de rétention de boues épaissies 13a équipé d'un aérateur et d'un agitateur tout comme le premier réservoir de boues en excès 8a et le second réservoir de boues en excès 9a, respectivement ;
   (ii) la mise en œuvre d'une première étape de renvoi des boues Va qui est une étape de renvoi des boues vers le premier réacteur séquentiel discontinu 2a et le second réacteur séquentiel discontinu 3a à partir du réservoir de rétention de boues 12a et du réservoir de rétention de boues épaissies 13a dans lesquels les boues ont été précédemment aérées et agitées ; et
   (iii) la mise en œuvre d'une seconde étape de renvoi des boues Wa qui est une étape de renvoi des boues, qui ont été précédemment aérées et agitées dans le réservoir de rétention de boues épaissies 13a, vers le réservoir de rétention de boues 12a ;

   dans lequel les boues dans le réservoir de rétention de boues épaissies 13a sont alimentées depuis le réservoir de rétention de boues 12a par l'intermédiaire d'une étape d'épaississement de boues Za,
   maintenant ainsi le nombre de bactéries du genre *Bacillus* dans les réacteurs séquentiels discontinus 2a et 3a.

2. Procédé de traitement des eaux usées selon la revendication 1, comprenant en outre l'ajout d'un accélérateur de traitement dans un ou plusieurs réservoirs sélectionnés parmi:

   le premier réacteur séquentiel discontinu 2a,
   le second réacteur séquentiel discontinu 3a,
   le réservoir de rétention de boues 12a, et
   le réservoir de rétention de boues épaissies 13a.

3. Procédé de traitement des eaux usées selon la revendication 2, dans lequel l'accélérateur de traitement est une ou plusieurs substances sélectionnées parmi le groupe constitué d'un composé de silicium, d'un composé de magnésium, d'un composé d'aluminium, de peptone et d'un extrait de levure sèche.

4. Procédé de traitement des eaux usées selon la revendication 1 ou 2, comprenant l'ajout d'une source d'azote dans un ou plusieurs réservoirs sélectionnés parmi :

le réservoir de rétention de boues 12a, et
le réservoir de rétention de boues épaissies 13a.

**5.** Procédé de traitement des eaux usées selon la revendication 4, dans lequel la source d'azote est une ou plusieurs substances sélectionnées parmi l'urée, le sulfate d'ammonium, le chlorure d'ammonium et le nitrate d'ammonium.

**6.** Procédé de traitement des eaux usées selon l'une quelconque des revendications 1 à 5, dans lequel la quantité de boues renvoyées dans la première étape de renvoi des boues Va équivaut à 10 à 30 % de la quantité de l'eau brute entrante.

**7.** Procédé de traitement des eaux usées selon l'une quelconque des revendications 1 à 6, dans lequel la quantité de boues renvoyées dans la seconde étape de renvoi des boues Wa équivaut à 15 à 60 %/semaine de la quantité de boues dans le réservoir de rétention de boues 12a.

Fig. 1

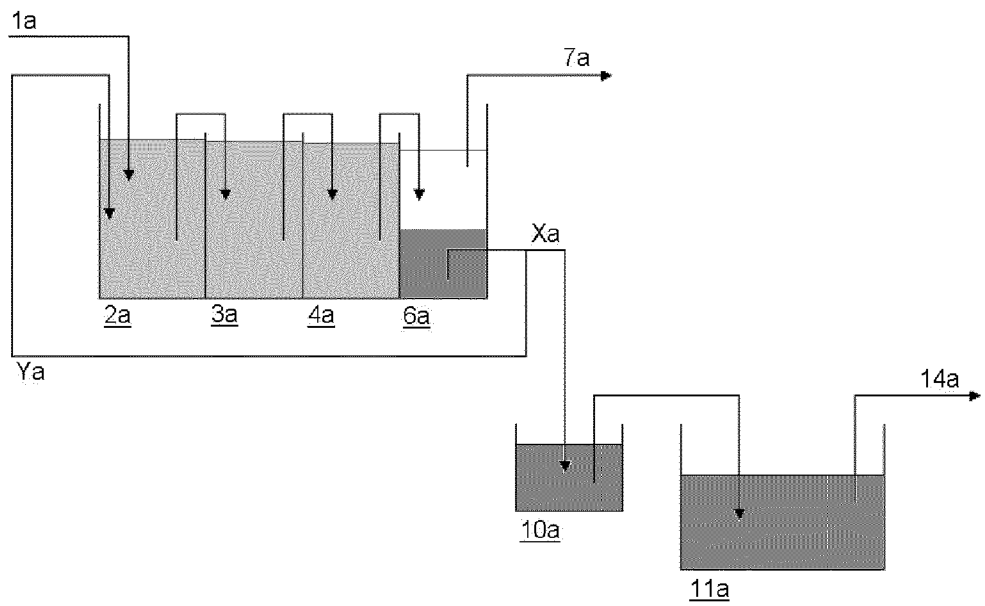
1a
7a
Xa
2a
3a
4a
6a
Ya
14a
10a
11a

Fig. 2

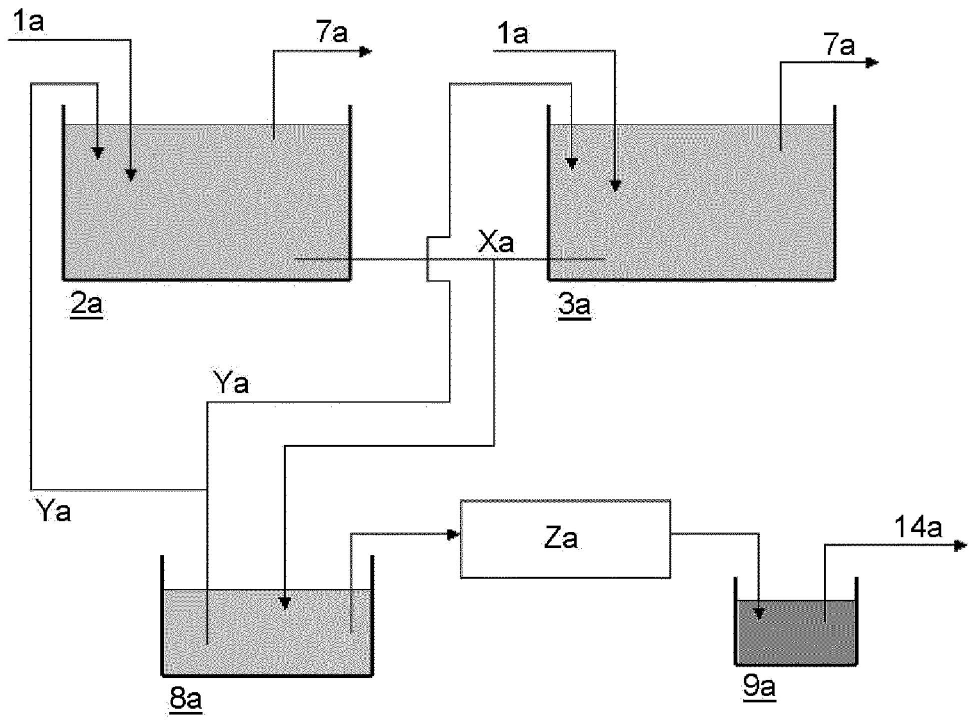
1a
7a
1a
7a
Xa
2a
3a
Ya
Ya
Za
14a
8a
9a

Fig. 3

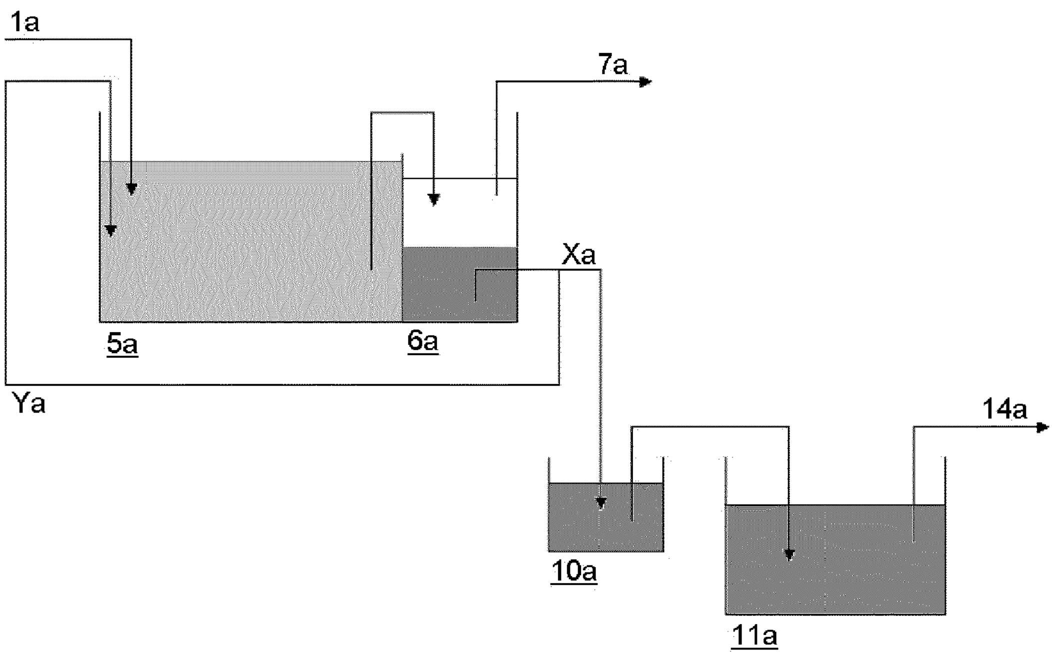


Fig. 4

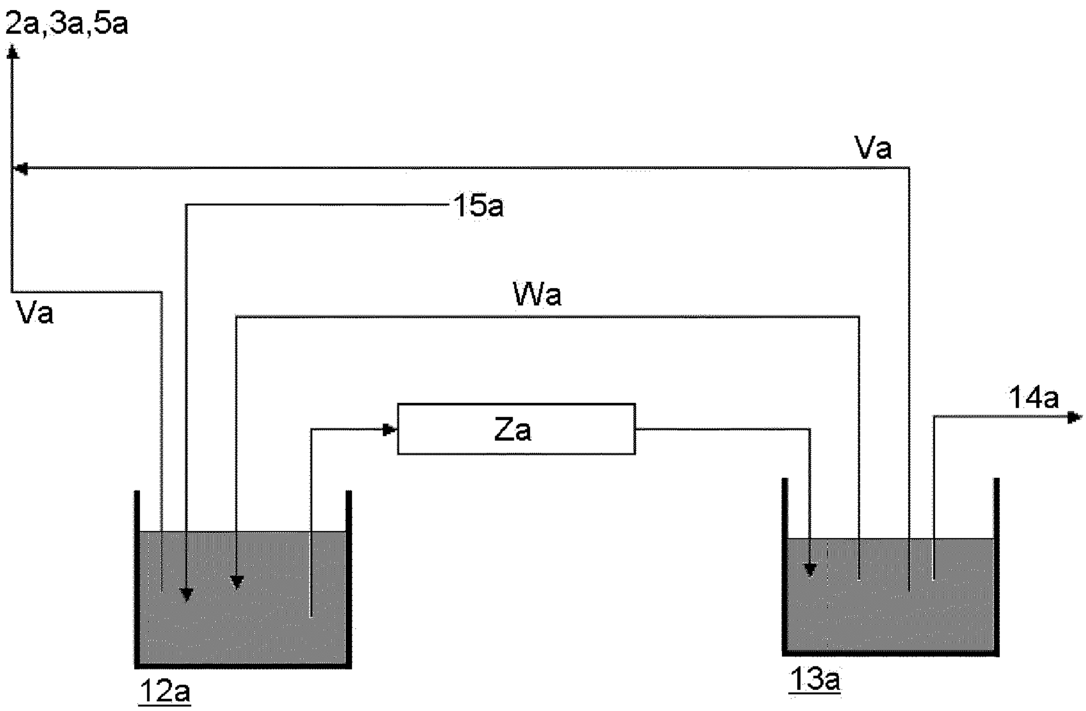

Fig. 5

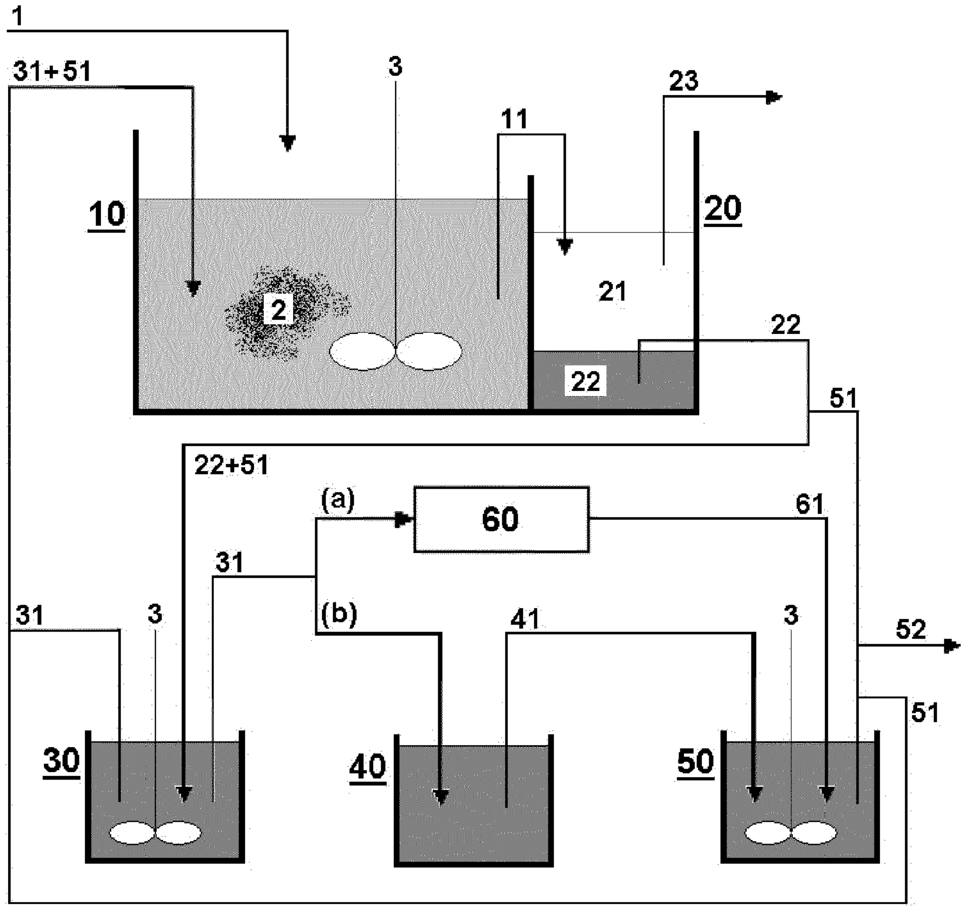
1
31+51
3
23
11
10
20
2
21
22
22
51
22+51
(a)
60
61
31
31
3
(b)
41
3
52
51
30
40
50

Fig. 6

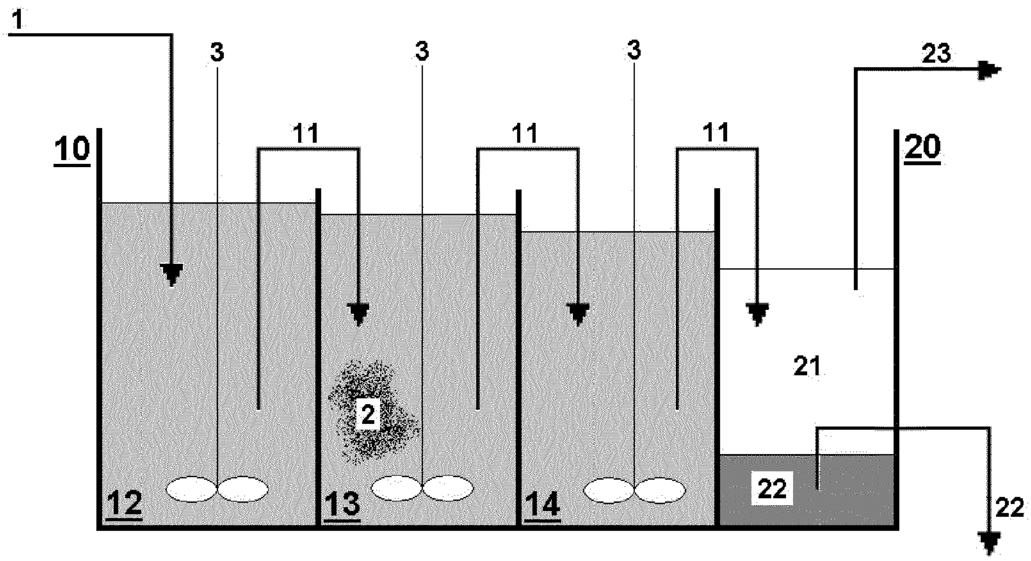
1
3
3
3
23
11
11
11
10
20
2
21
22
22
12
13
14

Fig. 7

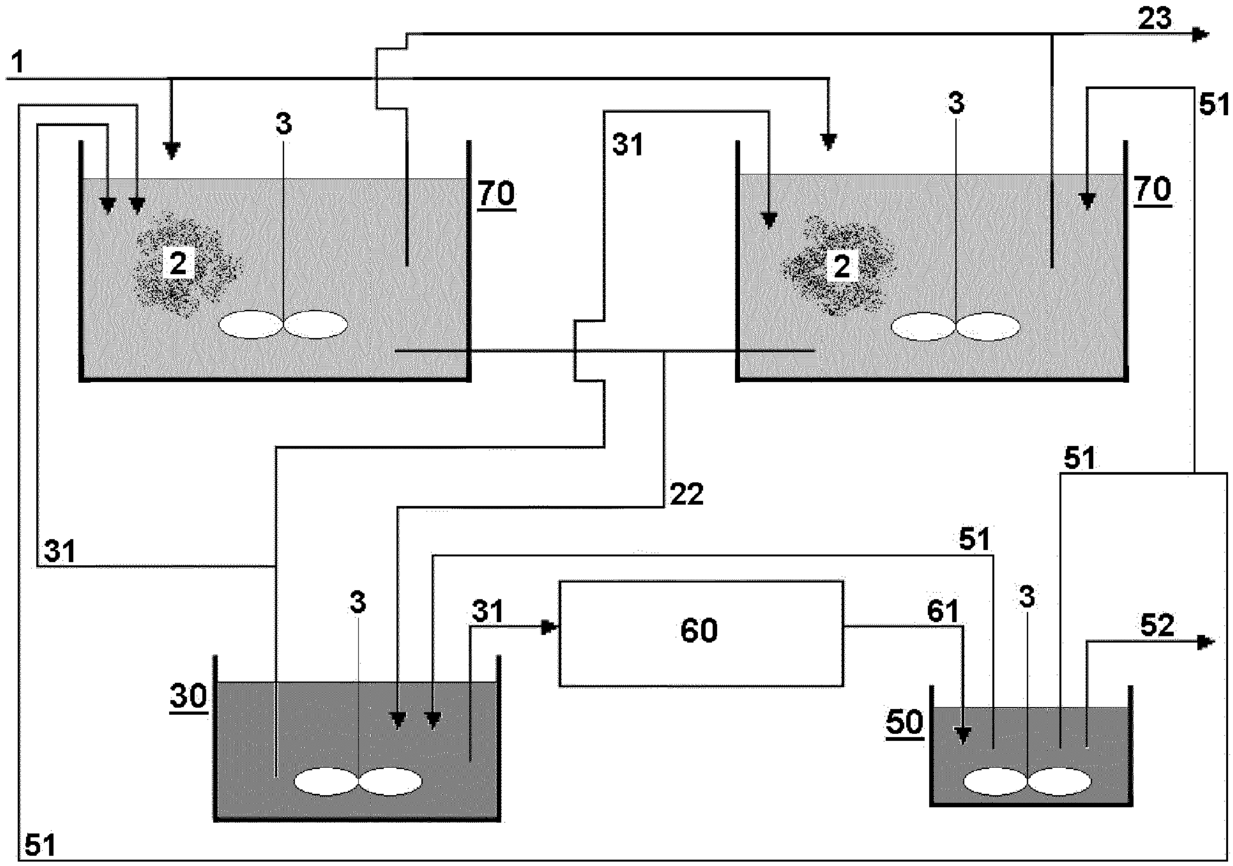

Fig. 8

GAGTTTGATC CTGGCTCAGG ACGAACGCTG GCGGCGTGCC TAATACATGC AAGTCGAGCG

GACAGATGGG AGCTTGCTCC CTGATGTTAG CGGCGGACGG GTGAGTAACA CGTGGGTAAC

CTGCCTGTAA GACTGGGATA ACTCCGGGAA ACCGGGGCTA ATACCGGATG GTTGTTTGAA

CCGCATGGTT CAAACATAAA AGGTGGCTTC GGCTACCACT TACAGATGGA CCCGCGGCGC

ATTAGCTAGT TGGTGAGGTA ACGGCTCACC AAGGCRACGA TGCGTAGCCG ACCTGAGAGG

GTGATCGGCC ACACTGGGAC TGAGACACGG CCCAGACTCC TACGGGAGGC AGCAGTAGGG

AATCTTCCGC AATGGACGAA AGTCTGACGG AGCAACGCCG CGTGAGTGAT GAAGGTTTTC

GGATCGTAAA GCTCTGTTGT TAGGGAAGAA CAAGTACCGT TCGAATAGGG CGGTACCTTG

ACGGTACCTA ACCAGAAAGC CACGGCTAAC TACGTGCCAG CAGCCGCGGT AATACGTAGG

TGGCAAGCGT TGTCCGGAAT TATTGGGCGT AAAGGGCTCG CAGGCGGTTT CTTAAGTCTG

ATGTGAAAGC CCCCGGCTCA ACCGGGGAGG GTCATTGGAA ACTGGGGAAC TTGAGTGCAG

AAGAGGAGAG TGGAATTCCA CGTGTAGCGG TGAAATGCGT AGAGATGTGG AGGAACACCA

GTGGCGAAGG CGACTCTCTG GTCTGTAACT GACGCTGAGG AGCGAAAGCG TGGGGAGCGA

ACAGGATTAG ATACCCTGGT AGTCCACGCC GTAAACGATG AGTGCTAAGT GTTAGGGGGT

TTCCGCCCCT TAGTGCTGCA GCTAACGCAT TAAGCACTCC GCCTGGGGAG TACGGTCGCA

AGACTGAAAC TCAAAGGAAT TGACGGGGGC CCGCACAAGC GGTGGAGCAT GTGGTTTAAT

TCGAAGCAAC GCGAAGAACC TTACCAGGTC TTGACATCCT CTGACAATCC TAGAGATAGG

ACGTCCCCTT CGGGGGCAGA GTGACAGGTG GTGCATGGTT GTCGTCAGCT CGTGTCGTGA

GATGTTGGGT TAAGTCCCGC AACGAGCGCA ACCCTTGATC TTAGTTGCCA GCATTCAGTT

GGGCACTCTA AGGTGACTGC CGGTGACAAA CCGGAGGAAG GTGGGGATGA CGTCAAATCA

TCATGCCCCT TATGACCTGG GCTACACACG TGCTACAATG GACAGAACAA AGGGCAGCGA

AACCGCGAGG TTAAGCCAAT CCCACAAATC TGTTCTCAGT TCGGATCGCA GTCTGCAACT

CGACTGCGTG AAGCTGGAAT CGCTAGTAAT CGCGGATCAG CATGCCGCGG TGAATACGTT

CCCGGGCCTT GTACACACCG CCCGTCACAC CACGAGAGTT TGTAACACCC GAAGTCGGTG

AGGTAACCTT TTAGGAGCCA GCCGCCGAAG GTGGGACAGA TGATTGGGGT GAAGTCGTAA

CAAGGTAGCC

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002086181 A
- WO 2006115199 A1
- JP 2007319837 A
- EP 0857696 A
- JP 2007216145 A
- JP 2000189991 A
- JP 10216789 A
- JP 2010101166 A
- JP 2010278088 A


### Non-patent literature cited in the description


- **MURAKAMI, IRIYE et al.** Domination of Bacillis spp. in Aerobic Night Soil Treatment Tank and Biochemical Properties Thereof. *Journal of Japan Society of Water Environment,* 1995, vol. 18 (2), 97-108
- **RYOZO IRIYE ; HIDEKI TAKATSUKA.** Studies on Sewage Treatment Improvement by Increase/Domination of Genus Bacillus Bacteria. *Bokin Bobai (Journal of Antibacterial and Antifungal Agents, Japan),* 1999, vol. 27 (7), 431-440
- **YUKIO DOI ; BOON-SING LEE ; RYOZO IRIYE ; SHINICHIRO TABUCHI ; KOICHI TATEISHI.** Bacterial Phase Dominating in Efficient Odorless Combined Treatment Purification Tank and Biochemical Properties Thereof. *Bokin Bobai (Journal of Antibacterial and Antifungal Agents, Japan),* 1998, vol. 26 (2), 53-63
- Quiagen Genomic DNA Handbook. 2001, 38-39